# EUROPEAN PATENT APPLICATION

(11) **EP 4 611 416 A1**
(43) Date of publication of application: **03.09.2025**
(21) Application number: 23884966.5
(22) Date of filing: 01.11.2023
(51) Int. Cl.: H04W 16/22

(54) **METHOD FOR SWITCHING OR UPDATING AI MODEL, AND COMMUNICATION APPARATUS**

(30) Priority: 01.11.2022 CN 202211358580
(71) Applicant: Huawei Technologies Co., Ltd., Shenzhen, Guangdong 518129 (CN)
(72) Inventor: TIAN, Yang, Shenzhen, Guangdong 518129 (CN); LI, Yuan, Shenzhen, Guangdong 518129 (CN); CHAI, Xiaomeng, Shenzhen, Guangdong 518129 (CN); SUN, Yan, Shenzhen, Guangdong 518129 (CN); PANG, Jiyong, Shenzhen, Guangdong 518129 (CN)
(74) Representative: Maiwald GmbH
(86) International application number: PCT/CN2023/128955
(87) International publication number: WO 2024/094038

(57) **Abstract**

This application provides an AI model switching or updating method. A change of a use environment (a moving speed of an inference network element, a channel environment, and the like) of an AI model can be learned of by monitoring an input or intermediate performance indicator of the AI model, for example, monitoring the input indicator of the AI model or monitoring the intermediate performance indicator of the AI model. In this way, whether the AI model needs to be switched or updated is determined based on correspondence information, to adapt to the change of the use environment of the AI model. This helps alleviate a problem that performance of the AI model decreases or deteriorates due to a great change of the use environment of the AI model.

## Description

This application claims priority to Chinese Patent Application No. 202211358580.2, filed with the China National Intellectual Property Administration on November 1, 2022 and entitled "AI MODEL SWITCHING OR UPDATING METHOD AND COMMUNICATION APPARATUS", which is incorporated herein by reference in its entirety.

### TECHNICAL FIELD

Embodiments of this application relate to the field of machine learning, and more specifically, to an AI model switching or updating method and a communication apparatus.

### BACKGROUND

Currently, artificial intelligence (artificial Intelligence, AI) is introduced into a wireless communication network, has been widely applied to many application scenarios of an air interface technology, for example, AI-based channel state information (channel state information, CSI) prediction, AI-based beam management, and AI-based CSI feedback, and plays an increasingly important role.

However, a performance evaluation result of a network in which an AI model is deployed shows that network performance is unstable, and the network performance deteriorates severely in some cases.

### SUMMARY

This application provides an AI model switching or updating method and a communication apparatus, namely, an AI model supervision method and a communication apparatus, to improve performance of a network in which an AI model is deployed.

According to a first aspect, an AI model switching or updating method is provided. The method may be performed by a network element, or may be performed by a chip or a circuit. This is not limited in this application. The following uses a first network element as an example for description. The method may include:
The first network element obtains first information, where the first information indicates an estimation result of a first parameter, the estimation result of the first parameter is based on a channel measurement result, and the channel measurement result is an input of an AI model.

The first network element determines, based on correspondence information and the first information, whether to switch or update a first AI model, where the first AI model is deployed in the first network element or a second network element, the correspondence information indicates a correspondence between M AI models and N values of the first parameter, M is an integer greater than or equal to 1, and N is an integer greater than or equal to 1.

In the technical solution of this application, the first network element may learn of, by monitoring an input indicator (for example, the first parameter) of the AI model, whether a use environment of the AI model changes, for example, whether a moving speed of a network element in which the AI model is deployed changes, or whether a channel environment changes. In this way, the first network element may determine whether to switch or update the AI model, to adapt to a change of the use environment. This helps alleviate a problem that performance of a network in which the AI model is deployed decreases due to the change of the use environment of the AI model.

With reference to the first aspect, in some implementations of the first aspect, that the first network element determines, based on correspondence information and the first information, whether to switch or update a first AI model includes:
The first network element determines that the estimation result of the first parameter corresponds to a first value in the N values, where the first value corresponds to a second AI model in the M AI models.

The first network element determines to switch the first AI model to the second AI model.

In this implementation, the first network element may determine, based on the correspondence information and the estimation result of the first parameter, whether to switch the currently used AI model. In this way, the first network element may learn of the change of the use environment of the AI model in time by monitoring the estimation result of the first parameter, and switch the AI model in time, to ensure performance of the AI model.

With reference to the first aspect, in some implementations of the first aspect, that the first network element determines, based on correspondence information and the first information, whether to switch or update a first AI model includes:
The first network element determines that the estimation result of the first parameter does not correspond to any one of the N values.

The first network element determines to update the first AI model.

In this implementation, the first network element may determine, based on the correspondence information and the estimation result of the first parameter, whether to update the currently used AI model. In this way, the first network element may learn of the change of the use environment of the AI model in time by monitoring the estimation result of the first parameter, and update the AI model in time when there is no AI model that adapts to a current use environment in a current model library, to ensure performance of the AI model.

With reference to the first aspect, in some implementations of the first aspect, the first AI model is deployed in the first network element, and the first network element is a terminal device.

In this implementation, the terminal device may determine, by monitoring the input indicator of the AI model, for example, a change of a moving speed of the terminal device, whether to switch or update the currently used first AI model. In different use environments, the performance of the AI model deployed in the terminal device may be ensured.

With reference to the first aspect, in some implementations of the first aspect, before the first network element obtains the first information, the method further includes:
The first network element receives second information, where the second information indicates the first parameter.

In this implementation, if the correspondence information records a correspondence between values of a plurality of monitoring indicators and AI models, the first network element may obtain the second information, to determine a specific monitoring indicator, namely, the first parameter. In this implementation, a correspondence can be established between the AI models and the plurality of monitoring indicators, to improve diversity of deployment environments of the AI model. Based on different deployment environments, corresponding monitoring indicators are selected for monitoring, to switch or update the AI model in time.

With reference to the first aspect, in some implementations of the first aspect, after the first network element determines, based on the correspondence information and the first information, to switch the first AI model to the second AI model, the method further includes:
The first network element sends first indication information to the second network element, where the first indication information indicates that the first network element requests to switch the first AI model to the second AI model.

With reference to the first aspect, in some implementations of the first aspect, the method further includes:
The first network element receives the second AI model from the second network element.

The first network element switches the first AI model to the second AI model.

In this implementation, after determining to switch the AI model, the first network element sends a switch request to the second network element, to obtain the second AI model from the second network element, so that the AI model can be switched in time, the performance of the AI model can be ensured, and the performance of the network in which the AI model is deployed can be stabilized.

With reference to the first aspect, in some implementations of the first aspect, after the first network element determines, based on the correspondence information and the first information, to update the first AI model, the method further includes:
The first network element sends second indication information to the second network element, where the second indication information is used to request to update the first AI model.

With reference to the first aspect, in some implementations of the first aspect, the method further includes:
The first network element sends training data to the second network element, where the training data is used to update the first AI model. Optionally, the training data includes the estimation result of the first parameter.

With reference to the first aspect, in some implementations of the first aspect, the method further includes:
The first network element receives a third AI model from the second network element.

The first network element updates the first AI model to the third AI model.

In this implementation, after determining to update the AI model, the first network element sends an update request to the second network element, to obtain the new third AI model from the second network element, so that the AI model can be updated in time, the performance of the AI model can be ensured, and the performance of the network in which the AI model is deployed can be stabilized.

With reference to the first aspect, in some implementations of the first aspect, that the first network element obtains first information includes:
The first network element measures a reference signal, to obtain the channel measurement result.

The first network element obtains the estimation result of the first parameter based on the channel measurement result, where the first information includes the estimation result of the first parameter.

In this implementation, UE determines a value of the monitoring indicator (namely, the first parameter) by measuring the reference signal, to monitor the input of the AI model, determine the change of the use environment of the AI model, and determine in time whether the AI model needs to be switched or updated.

With reference to the first aspect, in some implementations of the first aspect, before the first network element determines, based on the correspondence information and the first information, to switch or update the first AI model, the method further includes:
The first network element obtains a part or all of the correspondence information from the second network element or a third network element.

In this implementation, the first network element may obtain and store the correspondence information in advance from the second network element or the third network element, to subsequently determine whether to switch or update the AI model. The correspondence information may be flexibly configured. When the correspondence information changes, an updated configuration may also be delivered to the first network element in time via the second network element or the third network element.

With reference to the first aspect, in some implementations of the first aspect, the first network element is a network device, the first AI model is deployed in the second network element, and the second network element is a terminal device.

With reference to the first aspect, in some implementations of the first aspect, that the first network element obtains first information includes:
The first network element receives the first information from the second network element, where the first information includes the estimation result of the first parameter, or the first information includes information used to determine the estimation result of the first parameter, and the estimation result of the first parameter is based on the channel measurement result obtained on a side of the second network element by measuring a reference signal.

In this implementation, the first network element is a network side device. The first network element obtains the first information from the second network element, determines whether to switch or update the first AI model deployed in the second network element, and may switch or update, on a network side, the AI model deployed in the terminal device, to ensure the performance of the AI model on a terminal side, and further ensure the performance of the network in which the AI model is deployed.

With reference to the first aspect, in some implementations of the first aspect, if the first network element determines, based on the correspondence information and the first information, to switch the first AI model to the second AI model, the method further includes:
The first network element sends the second AI model to the second network element.

In this implementation, the first network element is a network side device, and the first network element is a storage network element of an AI model library on the terminal side. In comparison with storing the AI model library by the terminal side, storage overheads on the terminal side may be reduced.

With reference to the first aspect, in some implementations of the first aspect, if the first network element determines, based on the correspondence information and the first information, to update the first AI model, the method further includes:
The first network element obtains training data.

The first network element performs AI model training based on the training data, to obtain a third AI model.

The first network element sends the third AI model to the second network element.

In this implementation, the first network element is a network side device. When determining to update the AI model deployed in the second network element, the first network element obtains a new AI model through training and provides the new AI model to the terminal side, to ensure the performance of the AI model on the terminal side.

With reference to the first aspect, in some implementations of the first aspect, after the first network element determines, based on the correspondence information and the first information, to switch the first AI model to the second AI model, the method further includes:
The first network element sends first indication information to the second network element, where the first indication information indicates that the first network element requests to switch the first AI model to the second AI model.

The first network element receives third indication information from the second network element, where the third indication information indicates the first network element to switch the first AI model.

The first network element switches the first AI model to the second AI model based on the third indication information.

In this implementation, the first network element and the second network element may collaboratively switch the AI model. This is mainly applicable to switching of an AI model in a bilateral model. In this way, timely switching of the AI model in a bilateral model application scenario can be ensured, and stability of performance of a network in which the bilateral model is deployed can be ensured.

With reference to the first aspect, in some implementations of the first aspect, after the first network element determines, based on the correspondence information and the first information, to switch the first AI model to the second AI model, the method further includes:
The first network element sends first indication information to the second network element, where the first indication information indicates that the first network element requests to switch the first AI model to the second AI model.

The first network element receives third indication information from the second network element, where the third indication information indicates the first network element not to switch the first AI model.

In this implementation, when an AI model in the bilateral model cannot be switched, for example, there is no AI model for switching, neither the first network element nor the second network element switches the AI model.

With reference to the first aspect, in some implementations of the first aspect, after the first network element determines, based on the correspondence information and the first information, to update the first AI model, the method further includes:
The first network element sends second indication information and the estimation result of the first parameter to the second network element, where the second indication information indicates that the first network element requests to update the first AI model.

The first network element receives fourth indication information from the second network element, where the fourth indication information indicates the first network element to update the first AI model.

The first network element updates the first AI model to a third AI model based on the fourth indication information, where the third AI model is obtained through training based on the estimation result of the first parameter.

In this implementation, the first network element and the second network element may collaboratively update the AI model, to ensure timely update of an AI model in a bilateral model application scenario, and help ensure stability of performance of a network in which a bilateral model is deployed.

With reference to the first aspect, in some implementations of the first aspect, after the first network element determines, based on the correspondence information and the first information, to update the first AI model, the method further includes:
The first network element sends second indication information and the estimation result of the first parameter to the second network element, where the second indication information indicates that the first network element requests to update the first AI model.

The first network element receives fourth indication information from the second network element, where the fourth indication information indicates the first network element not to update the first AI model.

In this implementation, when there is no training data that can be used for model updating, neither the first network element nor the second network element in the bilateral model updates the AI model.

With reference to the first aspect, in some implementations of the first aspect, the AI model is applied to CSI prediction, beam management, or CSI feedback.

With reference to the first aspect, in some implementations of the first aspect, the first parameter includes one or more of the following:
a moving speed of the terminal device;
a channel signal to interference plus noise ratio SINR; and
a parameter reflecting a channel non-line-of- sight NLOS degree.

In this implementation, the performance of the AI model varies with the use environment of the AI model. In this way, different first parameters may be selected and monitored based on different use environments. A most key indicator that affects the performance of the AI model is monitored, so that more accurate determining is performed, to switch or update the AI model in time. This helps ensure the performance of the AI model and the performance of the network in which the AI model is deployed.

With reference to the first aspect, in some implementations of the first aspect, the reference signal is a channel state information-reference signal CSI-RS.

With reference to the first aspect, in some implementations of the first aspect, a fourth AI model is deployed in the first network element, and the fourth AI model and the first AI model are used in a matching manner.

That the first network element determines, based on correspondence information and the first information, whether to switch a first AI model includes:
The first network element determines that the estimation result of the first parameter corresponds to the first value in the N values, where the first value corresponds to the second AI model in the M AI models.

The first network element determines whether W stored AI models deployed in the first network element include an AI model matching the second AI model, where W is an integer greater than or equal to 1.

The first network element determines, based on a determining result, whether to switch the first AI model.

With reference to the first aspect, in some implementations of the first aspect, that the first network element determines, based on a determining result, whether to switch the first AI model includes:
The first network element determines, if the determining result is that the W AI models include a fifth AI model matching the second AI model, to switch the first AI model to the second AI model.

The method further includes:
The first network element sends third indication information to the second network element, where the third indication information indicates to switch the first AI model to the second AI model.

The first network element switches the fourth AI model to the fifth AI model.

With reference to the first aspect, in some implementations of the first aspect, that the first network element determines, based on a determining result, whether to switch the first AI model includes:
The first network element determines, if the determining result is that the W AI models do not include the AI model matching the second AI model, not to switch the first AI model.

With reference to the first aspect, in some implementations of the first aspect, a fourth AI model is deployed in the first network element, and the fourth AI model and the first AI model are used in a matching manner.

That the first network element determines, based on correspondence information and the first information, whether to update a first AI model includes:
The first network element determines that the estimation result of the first parameter does not correspond to any one of the N values.

The first network element determines whether training data used to update the first AI model can be obtained, and determines, based on a determining result, whether to update the first AI model.

With reference to the first aspect, in some implementations of the first aspect, if determining that the training data used to update the first AI model can be obtained, the first network element determines to update the first AI model.

The method further includes:
The first network element sends fourth indication information to the second network element, where the fourth indication information indicates the first network element to update the first AI model.

The first network element updates the fourth AI model to a sixth AI model.

With reference to the first aspect, in some implementations of the first aspect, that the first network element determines, based on a determining result, whether to update the first AI model includes:
If determining that there is no training data used to update the first AI model, the first network element determines not to update the first AI model.

In the foregoing implementations, the first network element determines in time, based on the estimation result of the first parameter provided by the second network element, whether to switch or update the AI models (specifically, the fourth A model deployed in the first network element and the first AI model deployed in the second network element) in the bilateral model. This helps ensure the performance of the AI model and the performance of the network in which the AI model is deployed.

According to a second aspect, an AI model switching or updating method is provided. The method may be performed by a network element, or may be performed by a chip or a circuit. This is not limited in this application. The following uses a second network element as an example for description.

The method may include:
The second network element obtains a channel measurement result fed back by a first network element.

The second network element restores, based on a fourth AI model, the fed-back channel measurement result, to obtain a restored channel measurement result.

The second network element determines, based on the fed-back channel measurement result and the restored channel measurement result, whether to switch or update the fourth AI model.

In this technical solution, the second network element may determine in time, based on a monitoring result of an intermediate performance indicator of a bilateral model, whether to switch or update an AI model in the bilateral model. This helps ensure performance of the AI model in the bilateral model and performance of a network in which the bilateral model is deployed.

Optionally, the fed-back channel measurement result is obtained by the first network element by processing, based on a first AI model, a channel measurement result obtained through measurement.

With reference to the second aspect, in some implementations of the second aspect, that the second network element determines, based on the fed-back channel measurement result and the restored channel measurement result, whether to switch or update the fourth AI model includes:
The second network element determines a value of an error indicator of a verification dataset based on the fed-back channel measurement result, the restored channel measurement result, and the verification dataset.

If the value of the error indicator does not meet a specified condition, the second network element determines not to switch or update the fourth AI model.

Alternatively, if the value of the error indicator meets a specified condition, the second network element determines to switch or update the fourth AI model.

Optionally, the specified condition may include: The value of the error indicator is greater than or equal to a specified threshold T.

For example, the error indicator is a GCS. It is known that the GCS uses a cosine value of an included angle between two vectors in a vector space to measure a difference between two individuals. If the cosine value is closer to 1, it indicates that the included angle between the two vectors is closer to 0 degrees, and the two vectors are more similar. If the cosine value is closer to 0, it indicates that the included angle between the two vectors is closer to 180 degrees, and the two vectors are less similar. In this application, the fed-back channel measurement result is restored based on the fourth AI model, to obtain the restored channel measurement result. The GCS may be obtained through calculation based on the restored channel measurement result and the verification dataset. Specifically, the verification dataset is the channel measurement result obtained through measurement on a first network element side, and is a label of the fourth AI model. The GCS is obtained by comparing the restored channel measurement result with the channel measurement result obtained through measurement. A larger value of the GCS indicates that the restored channel measurement result is closer to the channel measurement result obtained through measurement, in other words, the fourth AI model has higher precision of restoring the fed-back channel measurement result. A threshold T is set for the GCS. For example, the threshold T = 0.95. When the value of the GCS is greater than or equal to 0.95, it indicates that the precision of the fourth AI model in a current use environment meets a requirement. In other words, the fourth AI model adapts to the current use environment. Therefore, switching or updating may not be performed. On the contrary, when the value of the GCS is less than 0.95, it indicates that the precision of the fourth AI model in a current use environment does not meet a requirement. Therefore, the second network element needs to switch or update the fourth AI model.

With reference to the second aspect, in some implementations of the second aspect, that if the value of the error indicator meets a specified condition, the second network element determines to switch or update the fourth AI model includes:
If the value of the error indicator meets the specified condition, Q AI models stored in the second network element include a fifth AI model, and complexity of the fifth AI model is higher than complexity of the currently used fourth AI model, the second network element determines to switch the fourth AI model.

Alternatively, if the value of the error indicator meets the specified condition, and Q AI models stored in the second network element do not include an AI model whose complexity is higher than complexity of the currently used fourth AI model, the second network element determines to update the fourth AI model.

With reference to the second aspect, in some implementations of the second aspect, if the second network element determines to switch or update the fourth AI model, the method further includes:
The second network element sends a switch request or an update request to the first network element, where the switch request indicates to request to switch the fourth AI model, and the update request is used to request to update the fourth AI model.

The second network element receives, from the first network element, information indicating to perform switching or information indicating to perform updating.

The second network element switches the fourth AI model to the fifth AI model based on the information indicating to perform switching. Alternatively, the second network element updates the fourth AI model to a sixth AI model based on the information indicating to perform updating.

According to a third aspect, an AI model switching or updating method is provided. The method may be performed by a network element, or may be performed by a chip or a circuit. This is not limited in this application. The following uses a first network element as an example for description. The method corresponds to the method in the second aspect.

The method may include:
The first network element receives a switch request from a second network element, where the switch request indicates that the second network element requests to switch an AI model.

The first network element determines, based on the switch request and correspondence information, whether to switch a currently used first AI model, where the correspondence information indicates a correspondence between Q AI models and Q pieces of complexity information of the AI models, complexity information corresponding to the first AI model indicates a first complexity level, and Q is an integer greater than or equal to 1.

In the technical solution, the first network element determines, based on the switch request, whether to switch the currently used AI model. Because the switch request is sent by the second network element to the first network element based on a monitoring result of an intermediate performance indicator of a bilateral model, whether to switch an AI model in the bilateral model may be determined in time. This helps ensure performance of the AI model in the bilateral model and performance of a network in which the bilateral model is deployed.

With reference to the third aspect, in some implementations of the third aspect, that the first network element determines, based on the switch request and correspondence information, whether to switch a currently used first AI model includes:
The first network element determines, based on the switch request, whether the Q AI models include an AI model corresponding to a second complexity level, where the second complexity level is higher than the first complexity level.

If the Q AI models include a second AI model corresponding to the second complexity level, the first network element determines to switch the first AI model to the second AI model.

The method further includes:
The first network element sends, to the second network element, information indicating to perform switching.

The first network element switches the first AI model to the second AI model.

With reference to the third aspect, in some implementations of the third aspect, that the first network element determines, based on the switch request and correspondence information, whether to switch a currently used first AI model includes:
The first network element determines, based on the switch request, whether the Q AI models include an AI model corresponding to a second complexity level, where the second complexity level is higher than the first complexity level.

If the Q AI models do not include an AI model corresponding to the second complexity level, the first network element determines not to switch the first AI model.

The method further includes:
The first network element sends, to the second network element, indication information indicating not to perform switching.

Optionally, with reference to the third aspect, in some implementations of the third aspect, the first network element receives an update request from the second network element, where the update request indicates that the second network element requests to update the AI model.

The first network element determines, based on the update request, whether to update the first AI model.

For a specific implementation in which the first network element determines, based on the update request, whether to update the first AI model, refer to an implementation in which the first network element determines, based on the correspondence information and the first information, whether to update the first AI model in the first aspect. A process is similar, and details are not described again.

For technical effects of other implementations in the second aspect and the third aspect, refer to descriptions of technical effects of an implementation of the bilateral model in the first aspect. Details are not described again.

According to a fourth aspect, this application provides an AI model switching or updating method, where the method includes:
A second network element sends correspondence information to a first network element, where the correspondence information indicates a correspondence between M AI models and N values of a first parameter, M is an integer greater than or equal to 1, and N is an integer greater than or equal to 1.

Alternatively,
the correspondence information indicates a correspondence between Q AI models and R pieces of complexity information of the AI models, the R pieces of complexity information indicate different complexity levels, and Q and R both are integers greater than or equal to 1.

With reference to the fourth aspect, in some implementations of the fourth aspect, the method further includes:
The second network element sends second information to the first network element, where the second information indicates the first parameter.

According to a fifth aspect, this application provides a communication apparatus. The communication apparatus may include modules that are in one-to-one correspondence with and that are configured to perform the methods/operations/steps/actions described in the first aspect to the fourth aspect. The module may be a hardware circuit, may be software, or may be implemented by a hardware circuit in combination with software. The communication apparatus may be a first network element or a second network element.

In an implementation, the communication apparatus is a communication device. For example, the communication device may include a communication unit and/or a processing unit. The communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the communication device. When the apparatus is a chip, a chip system, or a circuit used in a terminal device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

In an example, the communication apparatus is a terminal device, or the communication apparatus is a chip, a chip system, a circuit, or the like disposed in the terminal device. In another example, the communication apparatus is an access network device, or the communication apparatus is a chip, a chip system, a circuit, or the like disposed in the access network device.

According to a sixth aspect, this application provides a communication apparatus. The communication apparatus includes a processor, and the processor is configured to execute a computer program or instructions stored in a memory, to perform the method provided in any one of the first aspect or the third aspect and the implementations of the first aspect or the third aspect. Optionally, the communication apparatus further includes the memory. The communication apparatus may be a first network element.

According to a seventh aspect, this application provides a communication apparatus. The communication apparatus includes a processor and a communication interface, and is configured to perform the method provided in any one of the second aspect or the fourth aspect and the implementations of the second aspect or the fourth aspect. For example, the communication interface may be a transceiver, a hardware circuit, a bus, a module, a pin, or a communication interface of another type.

According to an eighth aspect, this application further provides a computer program. When the computer program is run on a computer, the computer is enabled to perform the method provided in any one of the first aspect to the fourth aspect or the implementations of the first aspect to the fourth aspect.

According to a ninth aspect, this application further provides a computer program product, including instructions. When the instructions are run on a computer, the computer is enabled to perform the method provided in any one of the first aspect to the fourth aspect or the implementations of the first aspect to the fourth aspect.

According to a tenth aspect, this application further provides a computer-readable storage medium. The computer-readable storage medium stores a computer program or instructions. When the computer program or the instructions are run on a computer, the computer is enabled to perform the method provided in any one of the first aspect to the fourth aspect or the implementations of the first aspect to the fourth aspect.

According to an eleventh aspect, this application further provides a chip. The chip is configured to read a computer program stored in a memory, to perform the method according to any one of the first aspect to the fourth aspect or the implementations of the first aspect to the fourth aspect. Alternatively, the chip includes a circuit configured to perform the method provided in any one of the first aspect to the fourth aspect or the implementations of the first aspect to the fourth aspect.

According to a twelfth aspect, this application further provides a chip system. The chip system includes a processor, configured to support an apparatus in implementing the method provided in any one of the first aspect to the fourth aspect or the implementations of the first aspect to the fourth aspect. In a possible design, the chip system further includes a memory, and the memory is configured to store a program and data that are necessary for the apparatus. The chip system may include a chip, or may include a chip and another discrete component.

According to a thirteenth aspect, this application provides a communication system, including the foregoing first network element and second network element.

For example, one of the first network element and the second network element is a terminal device, and the other is a network device like an access network device.

For technical effects of the solutions provided in any one of the second aspect to the thirteenth aspect or the implementations of the second aspect to the thirteenth aspect, refer to corresponding descriptions in the first aspect. Details are not described again.

### BRIEF DESCRIPTION OF DRAWINGS

FIG. 1 is a diagram of a communication system to which an embodiment of this application is applicable;
FIG. 2 is a schematic flowchart of an AI model switching or updating method according to this application;
FIG. 3 shows an example of an AI model switching or updating method according to this application;
FIG. 4 shows an example of an AI model switching or updating method according to this application;
FIG. 5 is a diagram of AI-based CSI prediction;
FIG. 6 shows an application example of an AI model switching or updating method according to this application;
FIG. 7 shows an application example of an AI model switching or updating method according to this application;
FIG. 8 is a diagram of an AI-based CSI feedback process;
FIG. 9 is a schematic flowchart of an AI model switching method according to this application;
FIG. 10 is a schematic flowchart of an AI model updating method according to this application;
FIG. 11 shows an application example of an AI model switching or updating method in AI-CSI feedback according to this application;
FIG. 12 is a schematic flowchart of an AI model switching or updating method according to this application;
FIG. 13 is a block diagram of a communication apparatus according to this application; and
FIG. 14 is a block diagram of a communication apparatus according to this application.

### DESCRIPTION OF EMBODIMENTS

The following describes technical solutions in embodiments of this application with reference to accompanying drawings.

The technical solutions provided in this application may be applied to various communication systems. For example, the communication system may be a 4th generation (4th generation, 4G) communication system (for example, a long term evolution (long term evolution, LTE) system), a 5th generation (5th generation, 5G) communication system, a worldwide interoperability for microwave access (worldwide interoperability for microwave access, WiMAX) or wireless local area network (wireless local area network, WLAN) system, a satellite communication system, or a future communication system, for example, a 6G communication system, or a converged system of a plurality of systems. The 5G communication system may also be referred to as a new radio (new radio, NR) system.

A network element in the communication system may send a signal to another network element or receive a signal from another network element. The signal may be information, signaling, data, or the like. The network element may alternatively be replaced with an entity, a network entity, a device, a communication device, a communication module, a node, a communication node, or the like. In this application, the network element is used as an example for description.

A communication system to which this application is applicable may include a first network element and a second network element, and optionally, further include a third network element. A quantity of first network elements, a quantity of second network elements, and a quantity of third network elements are not limited.

In embodiments of this application, the terminal device may be an entity, for example, a mobile phone, that is on a user side and that is configured to receive or transmit a signal. The terminal device is a handheld device having a wireless connection function, another processing device connected to a wireless modem, a vehicle-mounted device, or the like. The terminal device may be a portable, pocket-sized, handheld, computer built-in, or vehicle-mounted mobile apparatus. A terminal device 120 may be widely used in various scenarios, for example, cellular communication, a Wi-Fi system, D2D, V2X, peer to peer (peer to peer, P2P), M2M, machine type communication (machine type communication, MTC), internet of things (internet of things, IoT), virtual reality (virtual reality, VR), augmented reality (augmented reality, AR), industrial control, automatic driving, telemedicine, a smart grid, smart furniture, smart office, smart wearable, smart transportation, a smart city, an uncrewed aerial vehicle, a robot, remote sensing, passive sensing, positioning, navigation and tracking, self-delivery and mobility, and the like. Some examples of a communication device 120 are user equipment (user equipment, UE) in a 3GPP standard, a station (station, STA) in a Wi-Fi system, a fixed device, a mobile device, a handheld device, a wearable device, a cellular phone, a smartphone, a session initiation protocol (session initiation protocol, SIP) phone, a notebook computer, a personal computer, a smart book, a vehicle, a satellite, a global positioning system (global positioning system, GPS) device, a target tracking device, an uncrewed aerial vehicle, a helicopter, a flight vehicle, a ship, a remote control device, a smart home device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device like a smartwatch, a virtual reality (virtual reality, VR) device, an augmented reality (augmented reality, AR) device, a wireless terminal in industrial control (industrial control), a terminal in an internet of vehicles system, a wireless terminal in self driving (self driving), a wireless terminal in a smart grid (smart grid), a wireless terminal in transportation safety (transportation safety), a wireless terminal in a smart city (smart city), for example, a smart fueler, a terminal device on a high-speed railway, and a wireless terminal in a smart home (smart home), for example, a smart speaker, a smart coffee machine, and a smart printer. The terminal device 120 may be a wireless device in the foregoing various scenarios or an apparatus disposed in the wireless device, for example, a communication module, a modem, or a chip in the foregoing device. The terminal device may also be referred to as a terminal, user equipment (user equipment, UE), a mobile station (mobile station, MS), a mobile terminal (mobile terminal, MT), or the like. The terminal device may alternatively be a terminal device in a future wireless communication system. In addition, the terminal device may further include a location reference device, for example, an automated guided vehicle (automated guided vehicle, AGV) or a device having a similar function. A specific technology and a specific device form used by the terminal device are not limited in embodiments of this application. For ease of description, an example in which the terminal device is a terminal or UE is used below for description.

In this application, a communication apparatus configured to implement a terminal device function may be a terminal device, may be a terminal device having some functions of the foregoing communication device, or may be an apparatus that can support implementation of the foregoing terminal device function, for example, a chip system. The apparatus may be installed in the terminal device or used with the terminal device in a matching manner. In this application, the chip system may include a chip, or may include a chip and another discrete component.

The network device may be a device that provides a wireless communication function service, may communicate with the terminal device, and is usually located on a network side. The network device may be referred to as an access network device or a radio access network device. For example, the network device may be a base station. For example, the access network device in embodiments of this application includes but is not limited to a next generation base station (gNodeB, gNB) in a fifth generation (5th generation, 5G) communication system, a base station in a sixth generation (6th generation, 6G) mobile communication system, a base station in a future mobile communication system, an access point (access point, AP) in a wireless fidelity (wireless fidelity, Wi-Fi) system, an evolved NodeB (evolved NodeB, eNB) in a long term evolution (long term evolution, LTE) system, a radio network controller (radio network controller, RNC), a NodeB (NodeB, NB), a base station controller (base station controller, BSC), a home base station (for example, a home evolved NodeB, or a home NodeB, HNB), a baseband unit (baseband unit, BBU), a transmission reception point (transmission reception point, TRP), a transmitting point (transmitting point, TP), a base transceiver station (base transceiver station, BTS), a satellite, an uncrewed aerial vehicle, and the like. In a network structure, the network device may include a central unit (central unit, CU) node, may include a distributed unit (distributed unit, DU) node, may be a RAN device including a CU node and a DU node, or may be a RAN device including a control plane CU node, a user plane CU node, and a DU node. Alternatively, the network device may be a radio controller, a relay station, a vehicle-mounted device, a wearable device, and the like in a cloud radio access network (cloud radio access network, CRAN) scenario. In addition, the base station may be a macro base station, a micro base station, a relay node, a donor node, or a combination thereof. The base station may alternatively be a communication module, a modem, or a chip that is disposed in the foregoing device or apparatus. Alternatively, the base station may be a mobile switching center, a device that bears a base station function in device to device (device to device, D2D), vehicle to everything (vehicle-to-everything, V2X), or machine to machine (machine to machine, M2M) communication, a network side device in a 6G network, a device that bears a base station function in a future communication system, or the like. The base station may support networks of a same access technology or different access technologies. This is not limited. The base station may be fixed or movable. For example, a helicopter or an uncrewed aerial vehicle may be configured as a mobile base station, and one or more cells may move based on a position of the mobile base station. In another example, a helicopter or an uncrewed aerial vehicle may be configured as a device for communicating with another base station.

In this application, an apparatus configured to implement a function of the foregoing network device may be an access network device, may be a network device having some functions of an access network, or may be an apparatus that can support implementation of the functions of the access network, for example, a chip system, a hardware circuit, a software module, or a combination of a hardware circuit and a software module. The apparatus may be installed in the access network device or used with the access network device in a matching manner. In the method in this application, an example in which the communication apparatus configured to implement the function of the access network device is an access network device is used for description.

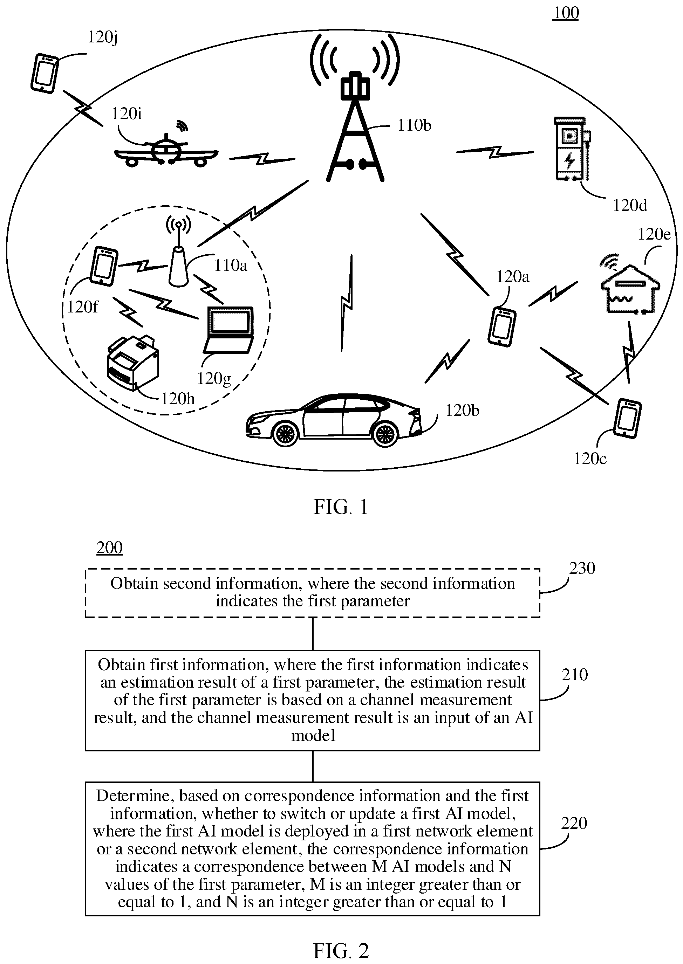

FIG. 1 is a diagram of a communication system 100 to which an embodiment of this application is applicable. As shown in FIG. 1, the wireless communication system includes a radio access network 100. The radio access network 100 may be a radio access network of a next generation (for example, 6G or a higher generation), or a conventional radio access network (for example, 5G, 4G, or 3G). One or more terminal devices (120a to 120j, which are collectively referred to as 120) may be interconnected or connected to one or more network devices (110a and 110b, which are collectively referred to as 110) in the radio access network 100. FIG. 1 is merely an example diagram. The wireless communication system may further include another device, for example, may further include a core network device, a wireless relay device, and/or a wireless backhaul device, which are/is not shown in FIG. 1.

In actual application, the wireless communication system may include a plurality of network devices (also referred to as access network devices), or may include a plurality of terminal devices. This is not limited. One network device may serve one or more terminal devices. One terminal device may also access one or more network devices. A quantity of terminal devices and a quantity of network devices included in the wireless communication system are not limited in this embodiment of this application.

Optionally, the communication system further includes at least one AI node. The at least one AI node is not shown in FIG. 1.

Optionally, the AI node may be deployed at one or more of the following locations in the communication system: an access network device, a terminal device, a core network device, or the like. Alternatively, the AI node may be independently deployed, for example, deployed at a location other than any one of the foregoing devices, for example, a host or a cloud server in an over the top (OTT, over the top) system. The AI node may communicate with another device in the communication system. The another device may be, for example, one or more of the following: a network device, a terminal device, a network element of a core network, or the like.

Optionally, the AI node is configured to perform an AI-related operation. For example, the AI-related operation may include, for example, one or more of the following: a model failure test, a model performance test, model training, data collection, or the like.

For example, the network device may forward, to the AI node, data that is related to an AI model and that is reported by the terminal device, and the AI node performs the AI-related operation. For another example, the network device or the terminal device may forward, to the AI node, data related to an AI model, and the AI node performs the AI-related operation. For another example, the AI node may send, to the network device and/or the terminal device, an output of the AI-related operation, for example, one or more of the following: a trained neural network model, a model evaluation result, a model test result, or the like. For example, the AI node may directly send the output of the AI-related operation to the network device and the terminal device. For another example, the AI node may send the output of the AI-related operation to the terminal device via the network device. For another example, the AI node may send the output of the AI-related operation to the network device via the terminal device.

It may be understood that a quantity of AI nodes is not limited in this application. For example, when there are a plurality of AI nodes, the plurality of AI nodes may be divided based on functions. For example, different AI nodes are responsible for different functions.

It may be further understood that the AI nodes may be independent devices, may be integrated into a same device to implement different functions, may be network elements in a hardware device, may be software functions running on dedicated hardware, or may be virtualization functions instantiated on a platform (for example, a cloud platform). Specific forms of the AI nodes are not limited in this application.

For ease of understanding, the following briefly describes related technologies or concepts in this application.

AI model: The AI model is an algorithm or a computer program that can implement an AI function. The AI model represents a mapping relationship between an input and an output of the model, or the AI model is a function model that maps an input of a specific dimension to an output of a specific dimension. A parameter of the function model may be obtained through machine learning training. For example, f(x) = ax² + b is a quadratic function model, and may be considered as an AI model. a and b are parameters of the AI model, and a and b may be obtained through machine learning training. For example, an AI model mentioned in the following embodiments of this application is not limited to a neural network, a linear regression model, a decision tree model, a support vector machine (support vector machine, SVM), a Bayesian network, a Q-learning model, or another machine learning (machine learning, ML) model.

An AI model design mainly includes a data collection phase (for example, collection of training data and/or inference data), a model training phase, and a model inference phase. Further, an inference result application phase may be included. In the foregoing data collection phase, a data source (data source) is used to provide a training dataset and the inference data. In the model training phase, the training data (training data) provided by the data source is analyzed or trained to obtain an AI model. Obtaining the AI model through learning by using a model training node is equivalent to obtaining a mapping relationship between an input and an output of the AI model through learning by using the training data. In the model inference phase, the AI model obtained through training in the model training phase is used to perform inference based on the inference data provided by the data source, to obtain an inference result. This phase may also be understood as follows: The inference data is input to the AI model, to obtain the output through the AI model. The output is the inference result. The inference result may indicate a configuration parameter used (acted) by an execution object, and/or an operation performed by the execution object. The inference result is released in the inference result application phase. For example, the inference result may be planned by an execution (actor) entity in a unified manner. For example, the execution entity may send the inference result to one or more execution objects (for example, a core network device, an access network device, or a terminal device) for execution. For another example, the execution entity may further feed back performance of the AI model to the data source, to facilitate subsequent model updating of the AI model.

It may be understood that the AI model may be implemented by using a hardware circuit, or may be implemented by using software, or may be implemented by combining software and hardware. This is not limited. A non-limitative example of the software includes: program code, a program, a subprogram, instructions, an instruction set, code, a code segment, a software module, an application, a software application, or the like.

It should be noted that, in embodiments of this application, an "indication" may include a direct indication, an indirect indication, an explicit indication, and an implicit indication. When a piece of indication information indicates A, it may be understood as that the indication information carries A, and the indication information may directly indicate A or indirectly indicate A. Indirectly indicating may mean directly indicating B and a correspondence between B and A by using the indication information, to achieve an objective of indicating A by using the indication information. The correspondence between B and A may be predefined in a protocol, prestored, or obtained by using a configuration between network elements.

The following describes in detail an AI model switching or updating method provided in this application with reference to the accompanying drawings. Embodiments provided in this application may be applied to the wireless communication system shown in FIG. 1. This is not limited.

In the following embodiments, a first network element, a second network element, or a third network element may be a network element integrating one or more functions: an inference network element of the AI model, a storage network element of an AI model library, or a training network element of the AI model. This is related to specific implementation of different embodiments.

Optionally, in some embodiments, the wireless communication system may include one or more of the following network elements: the first network element, the second network element, and the third network element, depending on a specific embodiment. These network elements may be logically deployed separately, but may be physically deployed in a same network element or different network elements. This is not limited. For example, the first network element is a module in the terminal device, and the second network element is another module in the terminal device, where the module may be located at an application layer. Alternatively, the first network element is a module in the access network device, and the second network element is another module in the access network device, where the module may be located at an application layer. Alternatively, the first network element is a terminal device or an access network device, and the second network element is a host or a cloud device in the over the top (over the top, OTT) system (or a system that provides various application services for a user over the internet). For another example, the first network element is a terminal device, and the second network element is an access network device. For another example, the first network element is an access network device, and the second network element is a terminal device.

For example, the first network element may be a terminal device or a component (for example, a chip or a circuit) of the terminal device. The second network element may be a network device or a component (for example, a chip or a circuit) of the network device, or the second network element may be a host or a cloud storage device in the OTT system or a component (for example, a chip or a circuit) of the host or the cloud storage device.

The following describes the technical solutions provided in this application.

FIG. 2 is a schematic flowchart of an AI model switching or updating method according to this application.

210: A first network element obtains first information.

The first information indicates an estimation result of a first parameter.

That the first information indicates an estimation result of a first parameter includes:
The first information is the estimation result of the first parameter, in other words, the first network element obtains the estimation result of the first parameter.

Alternatively, there is a correspondence between the first information and the estimation result of the first parameter, and the first information may indicate the estimation result of the first parameter.

The estimation result of the first parameter is obtained based on a channel measurement result, where the channel measurement result is an input of an AI model. In other words, the estimation result of the first parameter is an input indicator of the AI model. In other words, the first parameter is related to the channel measurement result. The channel measurement result is the input of the AI model. Therefore, the estimation result of the first parameter may reflect a change of the input of the AI model. The change of the input of the AI model may be learned of by monitoring the estimation result of the first parameter. For example, a change of a use environment of the AI model may be further learned of. For example, the change of the use environment of the AI model may be one or more of the following: a change of a channel condition, a change of a moving speed of an inference network element of the AI model, and the like.

For example, in some application scenarios, performance of the AI model is greatly affected by the moving speed of the inference network element of the AI model. When the moving speed of the inference network element changes greatly, generalization performance of the AI model deteriorates severely, and performance of a network in which the AI model is deployed also decreases or deteriorates accordingly.

Optionally, the first parameter may include one or more of the following indicators: a channel time domain quality indicator, a channel frequency domain quality indicator, a quantity of paths whose energy is greater than k times energy of a first path in a channel impulse response (channel impulse response, CIR), average power of a plurality of sampling points, a LOS probability, a parameter reflecting a channel NLOS degree, a signal to interference plus noise ratio (signal to interference plus noise ratio, SINR), a reference signal received power (reference signal received power, RSRP), a received signal strength indication (received signal strength indication, RSSI), an interference level, or the moving speed of the inference network element in which the AI model is deployed. It may be understood that these indicators may be obtained by measuring a reference signal, or by performing corresponding processing on a measurement result of the reference signal. A specific processing process is not limited herein. k is a number greater than 0. Optionally, k is a number greater than 0 and less than 1. For example, the parameter reflecting the channel NLOS degree may be, for example, a Rician factor. The Rician factor represents a power ratio between a LOS path and an NLOS path that are in a plurality of paths. In a LOS scenario, energy of a LOS path is higher than total energy of an NLOS path. Generally, the Rician factor is used to define a ratio between LOS path power and NLOS path power. The NLOS path power herein indicates a sum of power of all NLOS paths. In an NLOS scenario, an NLOS path is included, and a LOS path is not necessarily included. It can be learned from the foregoing that, generally, a higher Rician factor indicates higher LOS path energy relative to NLOS path energy, and a lower NLOS degree.

Optionally, the CIR may be replaced with any one of the following: a time-aligned CIR, a cross-correlation sequence of a plurality of CIR sequences, a normalized CIR, or the like. This is not limited. When the estimation result of the first parameter is determined based on the CIR, a quantity of sampling points is not limited.

For example, the first network element performs channel measurement based on the reference signal to obtain a channel frequency domain response (channel frequency response, CFR), and obtains the channel frequency domain quality indicator through calculation based on the CFR. In this embodiment of this application, when the first parameter is calculated based on the CFR, a quantity of bandwidths, a quantity of sub-bands, and a quantity of ports of the CFR are not limited. In addition, the CFR may be replaced with a normalized CFR. Details are not described below again.

For example, the channel frequency domain quality indicator may be a Doppler frequency shift, or may be a Doppler frequency. The Doppler shift may reflect the moving speed of the inference network element in which the AI model is deployed. For example, the moving speed of the inference network element may be estimated based on the Doppler frequency shift obtained through measurement, and then whether to switch or update the currently used AI model may be determined based on the moving speed. Especially for an AI model application scenario sensitive to the moving speed, whether to switch or update the AI model may be determined in time by monitoring the change of the moving speed of the inference network element, to adapt to the change of the moving speed, so as to reduce impact on the performance of the network in which the AI model is deployed.

220: The first network element determines, based on correspondence information and the estimation result of the first parameter, whether to switch or update a first AI model.

The correspondence information indicates a correspondence between M AI models and N values of the first parameter, M is an integer greater than or equal to 1, and N is an integer greater than or equal to 1. Optionally, M = N, or M > N.

Optionally, M may be a total quantity of AI models included in an AI model library, or may be a quantity of AI models included in one AI model group in the AI model library. For example, the AI model library includes one or more AI model groups, and different AI model groups correspond to different first parameters. For example, the AI model library includes an AI model group 1 and an AI model group 2, there is a correspondence between an AI model in the AI model group 1 and the SINR, and there is a correspondence between the AI model group 2 and a moving speed of UE. If M may be the total quantity of the AI models included in the AI model library, a case in which the M AI models indicated by the correspondence information belong to one or more AI model groups is not limited in this embodiment of this application. In other words, the correspondence information may include a correspondence between each of one or more first parameters and an AI model group corresponding to the first parameter.

Optionally, the M AI models and the N values of the first parameter may be replaced with M AI model groups and the N values of the first parameter. In other words, a same value of the first parameter may correspond to one or more AI model groups, in other words, a same value of the first parameter may correspond to one AI model group, and the AI model group includes one or more AI models. The one or more AI models may differ in some features. For example, the feature includes one or more of the following: implementation complexity, performance, or the like. After a value of the first parameter is determined, a specific AI model to be selected from a corresponding AI model group may be predefined according to a protocol, or may be determined based on a system requirement or a system setting. This is not limited herein. When an AI model to be switched or updated is indicated, an AI model group may be indicated, or a specific AI model in the AI model group may be indicated. In this application, an indication of the correspondence between the AI model and the value of the first parameter includes an indication of a correspondence between the AI model group and the value of the first parameter, or an indication of a correspondence between the specific AI model and the value of the first parameter.

In this embodiment of this application, the value of the first parameter may represent the following meaning: a specific value, for example, a specific quantized value, a value range, or a level corresponding to the value range.

In this application, the correspondence information indicates the correspondence between the AI model and the value of the first parameter. The estimation result of the first parameter determined based on the channel measurement result is a current value of the first parameter. Therefore, an AI model corresponding to the estimation result of the first parameter may be determined based on the correspondence information. Optionally, different values of the first parameter correspond to different AI models.

The correspondence information may be in a form of a table, a function, a character string, or the like, provided that the correspondence between the AI model and the value of the first parameter can be recorded. The following uses a table as an example to describe the correspondence information.

**Table 1**

| M AI models (an example in which M = 4 is used) | N values of the first parameter (an example in which N = 4 is used) |
|---|---|
| AI model 1 | Value 1 |
| AI model 2 | Value 2 |
| AI model 3 | Value 3 |
| AI model 4 | Value 4 |

For example, it is assumed that the AI model currently used by the first network element is the AI model 1, and the first network element determines that the estimation result of the first parameter is the value 1. It can be learned from the correspondence information that the value 1 corresponds to the AI model 1, so that the first network element may determine that the AI model does not need to be switched or updated. If determining that the estimation result of the first parameter is the value 3, the first network element determines that the AI model 1 needs to be switched to the AI model 3. For another example, if the first network element determines that the estimation result of the first parameter is a value 5, and based on the correspondence information, there is no AI model that matches the value 5 in the existing four AI models, the first network element determines that the first AI model needs to be updated.

In another example, M > N.

It is known that higher complexity of an AI model indicates better robustness of adaptation of the AI model to a more complex environment. Optionally, one value of the first parameter may correspond to a plurality of AI models with different complexity. The term "a plurality of" includes "two or more". Table 2 is used as an example for description.

**Table 2**

| M AI models (an example in which M = 5 is used) | N values of the first parameter (an example in which N = 4 is used) |
|---|---|
| AI model 1 | Value 1 |
| AI model 2 | Value 2 |
| AI model 3 | Value 3 |
| AI model 4 (precision 1) | Value 4 |
| AI model 5 (precision 2) | Value 4 |

In Table 2, the value 4 of the first parameter corresponds to the AI model 4 and the AI model 5.

For example, assuming that complexity of the AI model 5 is higher than that of the AI model 4, the AI model 5 has a stronger adaptability to a use environment. CSI prediction is used as an example. In a same use environment, prediction precision of the AI model 5 is higher than prediction precision of the AI model 4. It is assumed that the first parameter is the moving speed of the network element in which the AI model is deployed, and the AI model currently used by the first network element is the AI model 2. If determining, based on the correspondence information, that the estimation result of the first parameter corresponds to the value 4, the first network element may further choose to switch to the AI model 4 or the AI model 5 based on the complexity of the AI model. For example, at a current moving speed, if there is a high precision requirement for the AI model, the first network element may choose to switch to the AI model 5; or if there is a low precision requirement for the AI model, the first network element may choose to switch to the AI model 4.

Optionally, the method 200 may further include step 230, and step 230 may be performed before step 210.

230: The first network element obtains second information, where the second information indicates the first parameter.

It may be understood that, in the method 200, the first network element may determine in time, by monitoring the input indicator of the AI model, namely, the first parameter, whether to switch or update the AI model. Therefore, alternatively, the first parameter may also be referred to as a monitoring parameter of the AI model.

Optionally, when the correspondence information indicates a correspondence between the AI model and a plurality of first parameters, the first network element determines a current monitoring parameter based on the obtained second information, to determine whether to switch or update the AI model, e.g. determine switching or updating of the AI model.

**Table 3**

| M AI models (an example in which M = 4 is used) | N values of the first parameter (an example in which N = 4 is used) |
|---|---|
| AI model 1 | Value 1 of the moving speed of the network element in which the AI model is deployed |
| AI model 2 | Value 2 of the moving speed of the network element in which the AI model is deployed |
| AI model 3 | Value 1 of the SINR |
| AI model 4 | Value 2 of the SINR |

Table 3 is used as an example. A correspondence indicated by the correspondence information includes a correspondence between the moving speed of the network element in which the AI model is deployed and the AI model, and a correspondence between the SINR and the AI model. If the second information indicates that the first parameter is the moving speed of the network element in which the AI model is deployed, the first network element determines, based on an estimation result of the moving speed of the network element in which the AI model is deployed, whether to switch or update the AI model, e.g. determine switching or updating of the AI model.

Optionally, in step 230, the first network element may obtain the second information from a network side. For example, the first network element obtains the second information from a second network element or a third network element. This is not limited.

It can be learned from descriptions in the method 200 that, in the technical solution of this application, the change of the use environment of the AI model can be learned of in time by monitoring the estimation result of the first parameter, in other words, monitoring the input of the AI model. In this way, the AI model may be switched or updated in time to adapt to the change of the use environment of the AI model. This helps alleviate a problem that the performance of the network in which the AI model is deployed deteriorates after the use environment of the AI model changes.

The following provides some examples of the correspondence between the AI model and the value of the first parameter.

Example 1: The first parameter includes the moving speed of the UE.

**Table 4**

| M AI models (an example in which M = 4 is used) | N values of the moving speed of the UE (an example in which N = 4 is used) (in a unit of km/h) |
|---|---|
| AI model 1 | [0, 10) |
| AI model 2 | [10, 30) |
| AI model 3 | [30, 60) |
| AI model 4 | [60, 100] |

Example 2: The first parameter includes an absolute quantity of paths whose energy is greater than k times the energy of the first path in the CIR. In the following, the absolute quantity of paths whose energy is greater than k times the energy of the first path in the CIR is referred to as a quantity of paths for short. k is a number greater than 0. Optionally, k is a number greater than 0 and less than 1. For example, k is 0.5.

**Table 5**

| AI model | Quantity of paths |
|---|---|
| AI model 1 | 0 |
| AI model 2 | 8 |
| AI model 3 | 16 |
| AI model 4 | 32 |
| AI model 5 | 64 |
| AI model 6 | 128 |

Example 3: The first parameter includes a relative proportion of paths whose energy is greater than k times the energy of the first path in the CIR, referred to as a relative proportion for short below. k is a number greater than 0. Optionally, k is a number greater than 0 and less than 1. For example, k is 0.5.

**Table 6**

| AI model | Relative proportion |
|---|---|
| AI model 1 | 0 |
| AI model 2 | 1/16 |
| AI model 3 | 1/8 |
| AI model 4 | 1/4 |
| AI model 5 | 1/2 |
| AI model 6 | 2/3 |

Example 4: The first parameter includes the SINR.

**Table 7**

| AI model | SINR |
|---|---|
| AI model 1 | (-30, -20] |
| AI model 2 | (-20, -10] |
| AI model 3 | (-10, 0] |
| AI model 4 | (0, 10] |
| AI model 5 | (10, 20] |
| AI model 6 | (20, 30] |

As described above, the first parameter may alternatively be another parameter, which is not listed herein.

Optionally, the first AI model is deployed in the first network element or the second network element.

Optionally, in an example, if the first network element determines that the estimation result of the first parameter corresponds to a first value in the N values of the first parameter, and the first value corresponds to a second AI model in the M AI models, the first network element determines to switch the first AI model to the second AI model.

Optionally, in another example, if determining that the estimation result of the first parameter does not correspond to any one of the N values of the first parameter, the first network element determines to update the first AI model.

That "the estimation result of the first parameter corresponds to a first value in the N values of the first parameter" described above may be any one of the following possible implementations:

The N values of the first parameter are N specific values, and the estimation result of the first parameter is equal to a specific value in the N specific values.

Alternatively, the N values of the first parameter are N value ranges, and the estimation result of the first parameter belongs to a specific value range in the N value ranges.

Alternatively, the N values of the first parameter are N levels, and the estimation result of the first parameter corresponds to a specific level in the N levels.

In other words, any one of the foregoing possible implementations is the "correspondence".

In step 210, a manner in which the first network element obtains the first information varies depending on whether the first AI model is deployed in the first network element or the second network element.

The following describes a method for switching or updating the first AI model by the first network element for a case in which the first AI model is deployed in the first network element or the second network element.
(1) The first AI model is deployed in the first network element, and the first network element determines, based on the correspondence information, whether to switch or update the AI model, e.g. determine switching or updating of the first AI model.

If the first AI model is deployed in the first network element, that a first network element obtains first information in step 210 includes:
The first network element measures a reference signal to obtain the channel measurement result.

The first network element obtains the estimation result of the first parameter based on the channel measurement result, where the first information includes the estimation result of the first parameter. In other words, in this case, the first information may be the estimation result of the first parameter.

For example, the first network element is a terminal device, and the second network element is an access network device. The first network element obtains the channel measurement result by measuring the reference signal from the second network element. Based on the channel measurement result, the first network element may determine the estimation result of the first parameter. The reference signal includes but is not limited to one or more of a channel state information-reference signal (channel state information-reference signal, CSI-RS), a synchronization signal in a synchronization signal and physical broadcast channel block (synchronization signal and physical broadcast channel block, SSB), a signal on a physical broadcast channel, and/or the like.

When the first AI model is deployed in the first network element, the first network element may obtain the channel measurement result by measuring the reference signal from the second network element. The estimation result of the first parameter may be obtained based on the channel measurement result. Further, the first network element determines, based on the correspondence information and the estimation result of the first parameter, whether to switch or update the first AI model.

In a possible case, the first network element determines to switch the first AI model to the second AI model. In this case, the first network element sends first indication information to the second network element, where the first indication information indicates that the first network element requests to switch the first AI model to the second AI model. Alternatively, the first indication information may also be referred to as a switch request. It should be understood that, that the first network element determines to switch the first AI model to the second AI model means that the second AI model belongs to one of the M AI models recorded in the correspondence information. After receiving the first indication information of the first network element, the second network element sends the second AI model to the first network element. The first network element receives the second AI model from the second network element, to switch the first AI model to the second AI model.

In this case, in an example, the first network element may be the inference network element of the AI model, and the second network element may be the AI model library, namely, a storage network element of a plurality of AI models. When determining, based on the obtained correspondence information, to switch the first AI model to the second AI model, the first network element sends the first indication information to the second network element. For example, the first indication information indicates an identifier of the second AI model. The second network element sends the stored second AI model to the first network element based on the first indication information.

It should be particularly noted that, in all embodiments of this application, a description in which the first network element may be the inference network element of the AI model means that the first network element is at least an inference network element, and a case in which the first network element is necessarily not the storage network element or a training network element of the AI model library is not limited. For example, in an embodiment, the first network element is the inference network element of the AI model, and may also be the storage network element and/or the training network element, but a function of the storage network element and/or the training network element is not reflected in this embodiment. Alternatively, in an embodiment, the first network element is the inference network element of the AI model. However, in another embodiment, the first network element is the storage network element and/or the training network element of the AI model library. Related descriptions of the second network element and the third network element are similar, and are not described again below.

In another possible case, the first network element determines to update the first AI model. In this case, it means that there is no AI model that matches the estimation result of the first parameter currently determined by the first network element in the M AI models recorded in the correspondence information. The first network element may send second indication information to the second network element, where the second indication information is used to request to update the first AI model. Alternatively, the second indication information may also be referred to as an update request. The second network element receives the second indication information from the first network element, and learns that the first network element requests to update the first AI model. In this case, the second network element obtains training data, and performs AI model training based on the training data, to obtain a third AI model. For example, after receiving the second indication information, the second network element may indicate the first network element to send the training data. The first network element provides the training data to the second network element based on the indication of the second network element. Alternatively, the first network element may send the second indication information and the training data to the second network element when determining to update the first AI model. This is not limited. In addition, the second network element may alternatively obtain the training data from the third network element. This is not limited.

After obtaining the third AI model through training, the second network element sends the third AI model to the first network element. The first network element receives the third AI model from the second network element, and updates the first AI model to the third AI model.

In this case, in an example, the first network element may be the inference network element of the AI model, and the second network element may be the training network element of the AI model.

Optionally, when the first AI model is deployed in the first network element, the correspondence information based on which the first network element determines whether to switch or update the first AI model may be obtained by the first network element from the second network element, may be obtained by the first network element from the third network element, or may be predefined and prestored in the protocol. In addition, alternatively, some correspondences indicated by the correspondence information may be obtained by the first network element from the second network element or the third network element, and some correspondences are predefined and prestored in the protocol. These implementations are not limited in this application.

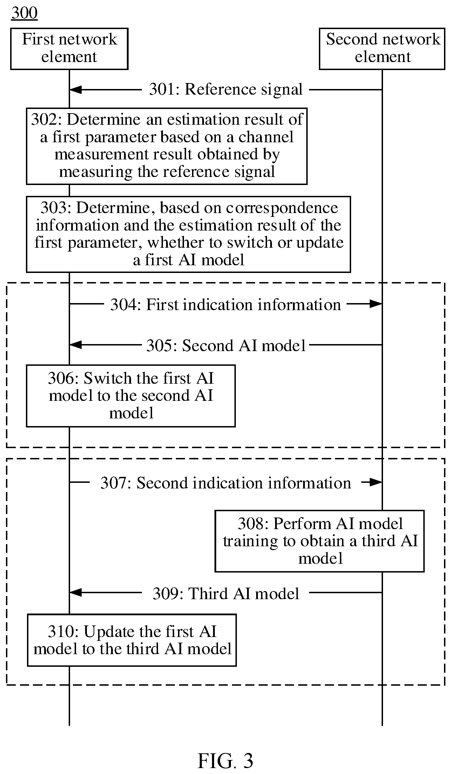

With reference to FIG. 3, the following describes, by using an example, a method for switching or updating the first AI model by the first network element when the first AI model is deployed in the first network element.

FIG. 3 shows an example of an AI model switching or updating method according to this application.

301: A first network element measures a reference signal from a second network element, to obtain a channel measurement result.

302: The first network element obtains an estimation result of a first parameter based on the channel measurement result.

303: The first network element determines, based on correspondence information and the estimation result of the first parameter, whether to switch or update a first AI model.

In a possible case, the first network element determines, based on the correspondence information and the estimation result of the first parameter, to switch the first AI model to a second AI model. In this case, after step 303, steps 304 to 306 are further included.

304: The first network element sends first indication information to the second network element, where the first indication information is used to request to switch the first AI model to the second AI model.

The second network element sends the second AI model to the first network element based on the first indication information of the first network element.

For example, in an implementation, the correspondence information is predefined in a protocol. In this case, the first network element sends the first indication information to the second network element, where the first indication information carries an identifier of the second AI model. The second network element sends the second AI model to the first network element based on the correspondence information predefined in a protocol and the identifier of the second AI model.

For example, in another implementation, the first network element sends the first indication information and the estimation result of the first parameter to the second network element. The second network element determines, based on the first indication information and the estimation result of the first parameter, to send the second AI model to the first network element. For example, the second network element determines, based on the estimation result of the first parameter, that the estimation result of the first parameter corresponds to the second AI model in a model library stored in the second network element, and sends the second AI model to the first network element. Optionally, in this implementation, the correspondence information may be predefined in the protocol, or may be locally stored by the second network element. In addition, the first network element obtains the correspondence information from the second network element or a third network element, stores the correspondence information in the first network element, and may determine, based on the correspondence information, whether to switch or update the AI model, as described in the foregoing step 303.

For example, in still another implementation, the first network element sends the estimation result of the first parameter to the second network element, where the estimation result of the first parameter implicitly indicates that the first network element requests to switch the first AI model. The second network element sends the second AI model to the second network element based on the estimation result of the first parameter and the correspondence information.

305: The first network element receives the second AI model from the second network element.

306: The first network element switches the first AI model to the second AI model.

In another possible case, the first network element determines, based on the correspondence information and the estimation result of the first parameter, to update the first AI model. In this case, after step 303, steps 307 to 310 are further included.

307: The first network element sends second indication information to the second network element, where the second indication information is used to request to update the first AI model.

Optionally, an implementation may be as follows: The first network element sends the estimation result of the first parameter to the second network element, and the second network element determines, based on the correspondence information and the estimation result of the first parameter, that the estimation result of the first parameter does not correspond to any AI model in the model library stored in the second network element. Therefore, the AI model needs to be updated.

Optionally, another implementation may be as follows: The first network element sends the second indication information and the estimation result of the first parameter to the second network element. The second network element learns, based on the second indication information, that the first network element requests to update the AI model. For example, the estimation result of the first parameter may be used as training data, and is used by the second network element to perform AI model training, to obtain a new AI model.

Optionally, the estimation result of the first parameter in step 302 is not limited to being obtained based on a channel measurement result of one time of channel measurement, or obtained based on channel measurement results of a plurality of times of channel measurement. For example, the estimation result of the first parameter may be an average value of a plurality of channel measurement results. This is not limited.

308: The second network element performs AI model training based on the second indication information, to obtain a third AI model.

For example, the second network element obtains the training data from the first network element, and performs AI model training.

Optionally, that the second network element obtains the training data, and performs AI model training, to obtain the third AI model may include one of the following implementations:
The second network element obtains sufficient training data, and trains the entire AI model, to obtain the third AI model.

Alternatively, the second network element obtains sufficient training data, and trains a specific function layer of the AI model, to obtain the third AI model.

Alternatively, the second network element obtains a small amount of training data, and trains the entire AI model, to obtain the third AI model.

Alternatively, the second network element obtains a small amount of training data, and trains a specific function layer of the AI model, to obtain the third AI model.

309: The second network element sends the third AI model to the first network element.

The first network element receives the third AI model from the second network element.

310: The first network element updates the first AI model to the third AI model.

(2) The first AI model is deployed in the second network element, and the first network element determines, based on the correspondence information, whether to switch or update the AI model, e.g. determine switching or updating of the first AI model deployed in the second network element.

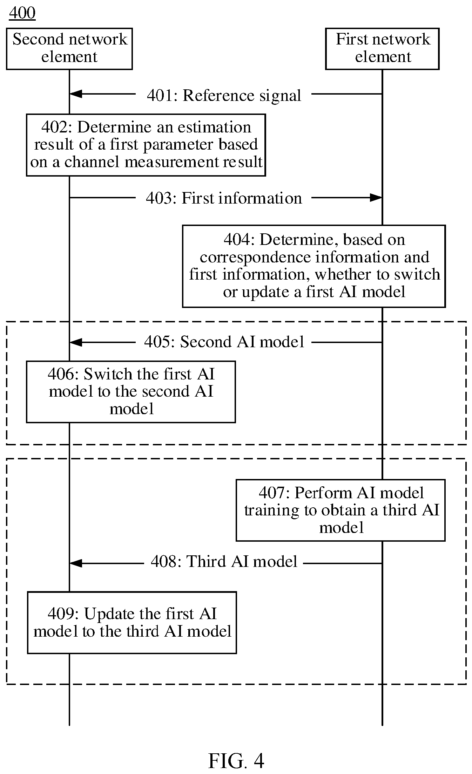

With reference to FIG. 4, the following describes, by using an example, a method for switching or updating the first AI model by the first network element when the first AI model is deployed in the second network element.

FIG. 4 shows an example of an AI model switching or updating method according to this application.

401: A second network element measures a reference signal from a first network element, to obtain a channel measurement result.

402: The second network element obtains an estimation result of a first parameter based on the channel measurement result.

403: The second network element sends first information to the first network element.

The first information indicates the estimation result of the first parameter.

For example, the first information may be the estimation result of the first parameter, or the first information is information used to determine the estimation result of the first parameter.

The first network element receives the first information from the second network element.

404: The first network element determines, based on correspondence information and the first information, whether to switch or update a first AI model.

In a possible case, the first network element determines, based on the correspondence information and the estimation result of the first parameter, to switch the first AI model to a second AI model. In this case, after step 404, steps 405 and 406 are further included.

405: The first network element sends the second AI model to the second network element.

The second network element receives the second AI model from the first network element.

406: The second network element switches the first AI model to the second AI model.

In another possible case, the first network element determines, based on the correspondence information and the estimation result of the first parameter, to update the first AI model. In this case, after step 404, steps 407 to 409 are further included.

407: The first network element performs AI model training to obtain a third AI model.

For example, the first network element may obtain training data from the second network element, and perform AI model training based on the training data, to obtain the third AI model.

Similar to the foregoing step 308, obtaining the third AI model by the first network element through training may include one of the following implementations:

The first network element obtains sufficient training data, and trains the entire AI model, to obtain the third AI model.

Alternatively, the first network element obtains sufficient training data, and trains a specific function layer of the AI model, to obtain the third AI model.

Alternatively, the first network element obtains a small amount of training data, and trains the entire AI model, to obtain the third AI model.

Alternatively, the first network element obtains a small amount of training data, and trains a specific function layer of the AI model, to obtain the third AI model.

408: The first network element sends the third AI model to the second network element.

The second network element receives the third AI model from the first network element.

409: The second network element updates the first AI model to the third AI model.

In the examples shown in FIG. 3 and FIG. 4, the first network element monitors an input of the AI model, and determines, based on the correspondence information and a monitoring result (for example, the estimation result of the first parameter), whether the AI model needs to be switched or updated, to adapt to a change of a use environment of the AI model. This helps alleviate a problem that performance of the AI model decreases or deteriorates due to a great change of the use environment.

The AI model switching or updating methods shown in FIG. 2 to FIG. 4 may be applied to a plurality of scenarios, including but not limited to CSI prediction or beam management.

The following uses an example in which the first network element is UE, and the second network element is an access network device or a device other than the access network device, for example, referred to as a model library storage and/or training device, to describe application of the AI model switching or update method in this application in the CSI prediction or the beam management. Optionally, the model library storage and/or training device may communicate with the UE via the access network device. The access network device may transparently transmit communication information or process the communication information and then forward the communication information.

### Application scenario 1

### AI-based CSI prediction (namely, AI-based CSI prediction or AI-CSI prediction)

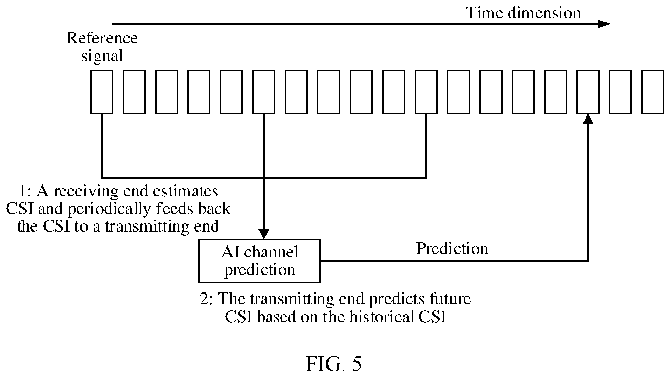

FIG. 5 is a diagram of AI-CSI prediction. A basic principle of the AI-CSI prediction is to use a feature extraction and fitting capability of a neural network to train the neural network on a training set including a large amount of offline CSI, so that the neural network can learn a channel change mode and fit a non-linear mapping relationship between historical CSI and future CSI, to replace a channel prediction closed-form expression based on a mathematical model. In an inference phase, several pieces of historical CSI (for example, CSI fed back by a receiving end and/or CSI predicted by a transmitting end at a past moment) are input into a neural network used for channel prediction, and a predicted value of CSI at a future moment is output. Because the transmitting end can predict CSI, the receiving end does not need to feed back estimated CSI at a prediction moment. Therefore, CSI feedback overheads on an air interface may be reduced.

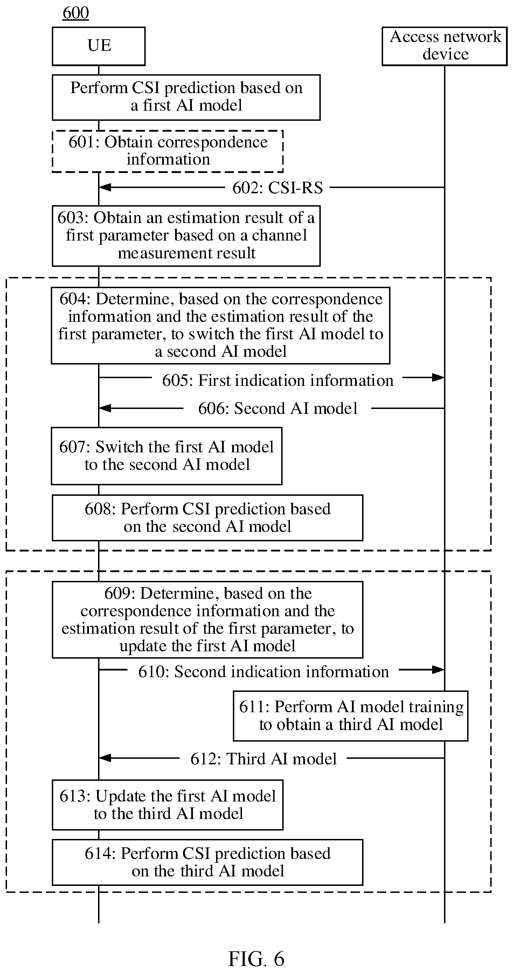

FIG. 6 shows an application example of an AI model switching or updating method according to this application.

In the example in FIG. 6, an example in which a first parameter is a moving speed of UE is used for description.

601: Optionally, the UE obtains correspondence information.

For example, the UE obtains the correspondence information from an access network device or a model library storage and/or training device. Optionally, the model library storage and/or training device may send the correspondence information to the UE via the access network device.

602: The UE measures a channel state information-reference signal CSI-RS from the access network device, to obtain a channel measurement result.

603: The UE obtains an estimation result of the first parameter based on the channel measurement result.

The channel measurement result is an input of an AI model, and the estimation result of the first parameter may be determined based on the channel measurement result.

The following separately describes switching and updating of the AI model by using examples.

The switching is used as an example. After step 603, the following steps 604 to 608 may be performed.

604: The UE determines, based on the correspondence information and the estimation result of the first parameter, to switch a first AI model to a second AI model.

The foregoing Table 2 is used as an example. It is assumed that the first AI model currently used by the UE is an AI model 2, and a current moving speed of the UE is determined to be 90 km/h. The UE determines, based on the correspondence information and the current moving speed of the UE, that the current moving speed corresponds to a value 4 in four values, and therefore may determine to switch the AI model 2 to an AI model 4.

605: The UE sends first indication information to the access network device or the model library storage and/or training device, where the first indication information is used to request to switch the first AI model to the second AI model.

The access network device or the model library storage and/or training device receives the first indication information from the UE, and sends the AI model 4 to the UE based on the first indication information.

Optionally, the model library storage and/or training device may receive the first indication information from the UE via the access network device, and send the AI model 4 to the UE via the access network device.

606: The UE receives the AI model 4 from the access network device or the model library storage and/or training device.

607: The UE switches the AI model 2 to the AI model 4.

Optionally, step 608 is further included.

608: The UE performs CSI prediction based on the AI model 4.

The updating is further used as an example. After step 603, the following steps 609 to 614 may be performed.

609: The UE determines, based on the correspondence information and the estimation result of the first parameter, to update a first AI model.

Table 1 is used as an example. It is assumed that the UE determines, based on the channel measurement result, that a current moving speed of the UE is 120 km/h. It can be learned that the current moving speed of the UE does not correspond to any one of four values. In this case, the UE determines to update the first AI model.

610: The UE sends second indication information to the access network device or the model library storage and/or training device, where the second indication information is used to request to update the first AI model.

611: The access network device or the model library storage and/or training device performs AI model training based on the second indication information, to obtain a third AI model.

In this example, it is assumed that the third AI model is an AI model 5.

612: The access network device or the model library storage and/or training device sends the third AI model (for example, the AI model 5) to the UE.

613: The UE switches an AI model 2 to the AI model 5.

Optionally, step 614 is further included.

614: The UE performs CSI prediction based on the AI model 5.

### Application scenario 2

### AI-based beam management (AI-based beam management)

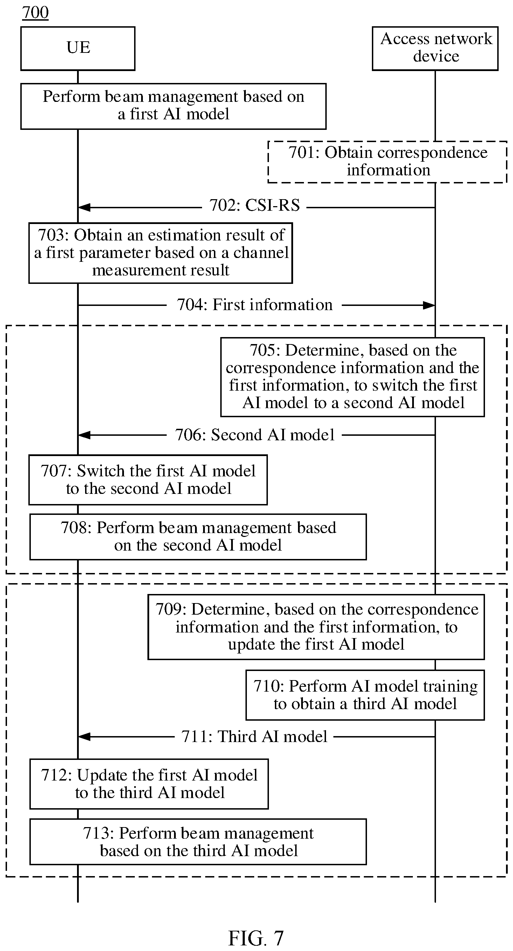

FIG. 7 shows an application example of an AI model switching or updating method according to this application.

In the example in FIG. 7, an example in which a first parameter is a moving speed of UE is still used for description.

701: Optionally, an access network device obtains correspondence information.

For example, the access network device prestores the correspondence information, or obtains the correspondence information from a model library storage and/or training device.

702: The UE measures a channel state information-reference signal CSI-RS from the access network device, to obtain a channel measurement result.

703: The UE obtains an estimation result of the first parameter based on the channel measurement result.

704: The UE sends first information to the access network device or the model library storage and/or training device, where the first information indicates the estimation result of the first parameter.

Switching is used as an example. After step 704, the following steps 705 to 708 may be performed.

705: The access network device or the model library storage and/or training device determines, based on the correspondence information and the estimation result of the first parameter, to switch a first AI model currently used by the UE to a second AI model.

For an implementation in which the access network device determines to switch the first AI model to the second AI model, refer to step 604. For brevity, details are not described herein again.

706: The access network device or the model library storage and/or training device sends the second AI model to the UE.

The UE receives the second AI model from the access network device.

707: The UE switches the first AI model to the second AI model.

Optionally, step 708 is further included.

708: The UE performs beam management based on the second AI model.

Updating is used as an example. After step 704, the following steps 709 to 713 may be performed.

709: The access network device or the model library storage and/or training device determines, based on the correspondence information and the estimation result of the first parameter, to update a first AI model currently used by the UE.

710: The access network device or the model library storage and/or training device performs AI model training to obtain a third AI model.

711: The access network device sends the third AI model to the UE, and the UE receives the third AI model.

712: The UE updates the first AI model to the third AI model.

Optionally, step 713 is further included.

713: The UE performs beam management based on the third AI model.

It may be found that in some of the foregoing examples, the first AI model is deployed in a first network element, and after the first network element determines to switch or update the first AI model, and sends a request for switching or updating the AI model to a second network element, the second network element provides, to the first network element, the second AI model used for switching or a new AI model obtained through training, namely, the third AI model. In some other examples, the first AI model is deployed in the second network element, and after determining to switch or update the first AI model in the second network element, the first network element sends, to the second network element, the second AI model used for switching or the new AI model obtained through training. These examples are described by using an example in which a network element in which the first AI model is deployed is not a storage network element of an AI model library, and is not a training network element of the AI model. For example, the first AI model is deployed in the UE, and the UE may be an inference network element of the AI model, but the UE is neither the storage network element of the AI model library nor the training network element of the AI model. After determining, based on the correspondence information, to switch the first AI model to the second AI model, the UE may send a switch request to a storage network element of a second AI model library, and obtain the second AI model from the storage network element, to perform switching. Alternatively, after determining, based on the correspondence information, to update the first AI model, the UE may send an update request to the training network element (for example, the access network device or another network device) of the AI model, and the training network element trains the AI model, and delivers a new AI model to the UE.

In addition, in the foregoing examples, the access network device may serve as a storage network element and a training network element. In other words, the access network device has a database storage function and a training function. Optionally, the storage network element and the training network element of the AI model may be different network elements. This is not limited in this application. For example, the first network element (for example, the UE) is the inference network element of the AI model, the second network element (for example, the access network device) is the training network element of the AI model, and M AI models recorded in the correspondence information are stored in a third network element, in other words, the third network element is the storage network element of the AI model. In this scenario, it is assumed that the first network element determines whether to switch or update the AI model, e.g. determine switching or updating of the AI model deployed in the first network element. When determining to switch the currently deployed first AI model to the second AI model, the first network element obtains the second AI model from the third network element. When determining to update the currently deployed first AI model, the first network element sends the update request to the second network element, and the second network element provides the new third AI model to the first network element after obtaining the new third AI model through training. In addition, the second network element may further send the third AI model to the third network element for storage. Therefore, these specific implementations are not particularly limited in this application.

For brevity of solution description, the following embodiments are described by using an example in which the storage network element and the training network element are a same network element.

Optionally, this application further provides an implementation in which the inference network element of the AI model is both the storage network element and the training network element. For example, the UE is used as an example, and the UE may be the inference network element, the storage network element, and the training network element at the same time. Specifically, the UE may obtain the channel measurement result by measuring the reference signal from the access network device, and further obtain the estimation result of the first parameter. For example, the first parameter is the moving speed of the UE. The UE monitors the moving speed of the UE, and switches or updates the AI model based on the correspondence information and a monitoring result of the moving speed.

The foregoing describes in detail the application of the AI model switching or updating method provided in this application to the CSI prediction and beam management. This application further provides application of the method to an auto-encoder (auto-encoder, AE) model.

The following describes the AE model by using AI-based CSI feedback (also represented as AI-CSI feedback) as an example.

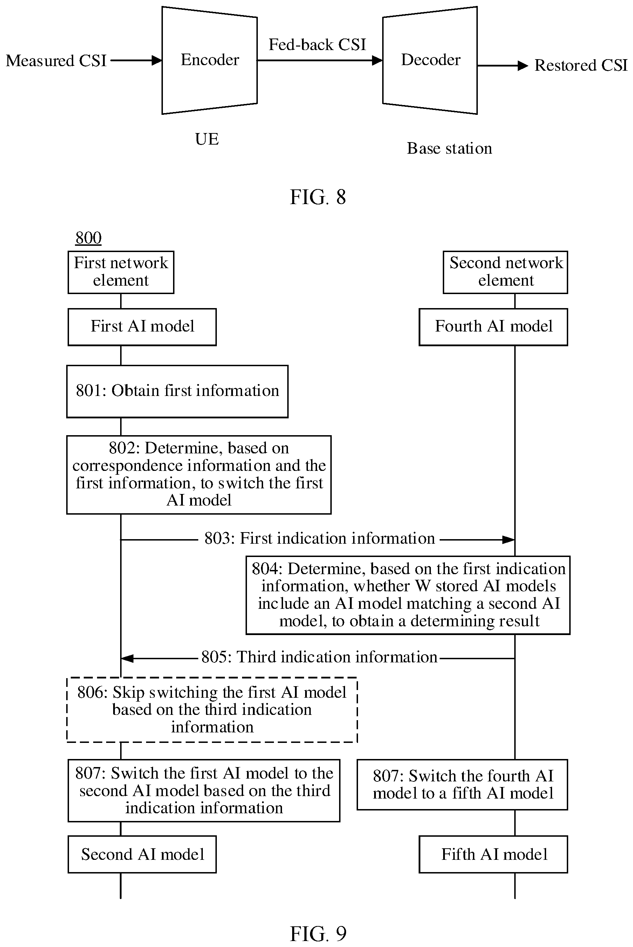

FIG. 8 is a diagram of an AI-based CSI feedback process. In AI-CSI feedback, when an AI model is deployed on a base station side, a base station obtains an estimation result of a CSI-RS on a UE side, and uses the estimation result as a label (also referred to as a truth label) for training. The AE model includes two sub-models: an encoder (encoder) and a decoder (decoder). An AE may generally refer to a network structure including the two sub-models. The AE model may also be referred to as a bilateral model, a dual-ended model, or a collaborative model. The encoder and the decoder of the AE are usually trained together and may be used in a matching manner. The CSI feedback may be implemented based on an AI model of the AE. For example, the UE side performs CSI compression and quantization via the encoder, and the base station performs CSI restoration via the decoder. As shown in FIG. 8, for the base station, an input of a model is CSI fed back by the UE, and an output is restored CSI. Model training needs to use CSI measured by the UE side as a truth label of the restored CSI.

FIG. 9 is a schematic flowchart of an AI model switching or updating method 800 according to this application.

As described in FIG. 8, in a dual-ended model, an encoder on a UE side and a decoder on a base station side are used in a matching manner. The encoder on the UE side may include one or more AI models, and the decoder on the base station side that matches the encoder on the UE side may also include one or more AI models. Quantities of AI models included in the encoder and the decoder that are used in a matching manner are the same, and the AI models are in one-to-one correspondence. In the following embodiments, an example in which the encoder on the UE side includes one AI model and the decoder on the base station side includes one AI model is used for description.

It is assumed that a first AI model is deployed in a first network element, a fourth AI model is deployed in a second network element, and the fourth AI model and the first AI model are used in a matching manner. It should be understood that an output of the first AI model is an input of the fourth AI model, and a truth label of the fourth AI model is an input of the first AI model.

801: The first network element obtains first information.

802: The first network element determines, based on correspondence information and the first information, whether to switch or update the first AI model.

In a possible case, if the first network element determines to switch the first AI model to a second AI model, after step 802, steps 803 to 807 are further included.

803: If determining to switch the first AI model to the second AI model, the first network element sends first indication information to the second network element, where the first indication information indicates that the first network element requests to switch the first AI model to the second AI model.

The second network element receives the first indication information from the first network element.

For step 803, refer to another implementation of step 304 in the method 300. Details are not described herein again.

804: The second network element determines, based on the first indication information, whether W stored AI models include an AI model matching the second AI model, to obtain a determining result, where W is an integer greater than or equal to 1.

It should be understood that the correspondence information in the foregoing embodiments indicates a correspondence between M AI models and N values of a first parameter. In an embodiment of the dual-ended model, the M AI models may be M encoders, and the W AI models in step 804 may be W decoders. M and W may be equal or not equal. This is not limited. For example, the second network element learns, based on the first indication information, that the first network element requests to switch a first encoder to a second encoder. The second network element determines whether the W stored decoders include a decoder matching the second encoder, to obtain a determining result.

Optionally, the W decoders may be stored in the second network element, in other words, the second network element may be a storage network element of an AI model. Alternatively, the W decoders may be stored in a third network element (a third-party device), or may be stored in another form. This is not limited.

Optionally, the correspondence information on a first network element side is predefined in a protocol. In this case, if determining to switch the first AI model to the second AI model, the first network element may include an identifier of the second AI model in the first indication information to be sent to the second network element. The second network element may learn, based on the correspondence information predefined in the protocol, that the first network element requests to switch to the second AI model.

Optionally, in step 804, the second network element may determine, based on another piece of correspondence information, whether the W AI models stored in the second network element include the AI model matching the second AI model. The "another piece of correspondence information" is used to distinguish from the foregoing "correspondence information". For example, in step 210 in FIG. 2, the correspondence information obtained by the first network element may be correspondence information 1. Herein, the second network element determines, based on correspondence information 2, whether the W AI models include the AI model matching the second AI model. Alternatively, the M AI models recorded in the correspondence information 1 are an AI model library of AI models that can be used by the first network element, and the W AI models recorded in the correspondence information 2 are an AI model library of AI models that can be used by the second network element.

For example, correspondences recorded in the correspondence information 1 and the correspondence information 2 are respectively shown in the following tables:

**Table 8**

| M AI models (an example in which M = 4 is used) | N values of the first parameter (an example in which N = 4 is used) |
|---|---|
| AI model 1 | Value 1 |
| AI model 2 | Value 2 |
| AI model 3 | Value 3 |
| AI model 4 | Value 4 |

**Table 9**

| W AI models (an example in which W = 3 is used) | N values of the first parameter (an example in which N = 3 is used) |
|---|---|
| AI model a | Value 1 |
| AI model b | Value 2 |
| AI model c | Value 3 |

In an example, the first network element currently uses the AI model 1, the second network element currently uses the AI model a, and the AI model 1 matches the AI model a. If an estimation result of the first parameter corresponds to the value 3 recorded in the correspondence information 1, the first network element determines to switch the AI model 1 (an example of the first AI model) to the AI model 3 (an example of the second AI model). The first network element sends the first indication information and the estimation result of the first parameter to the second network element. The second network element determines an estimation result of the first parameter and the value 3 recorded in the correspondence information 2, where the value 3 corresponds to the AI model c. In this case, the second network element determines that the W AI models include the AI model matching the second AI model, which is specifically the AI model c in this example.

805: The second network element indicates, based on the determining result, the first network element whether to switch the first AI model.

In a possible case, if the determining result is that the W AI models do not include the AI model matching the second AI model, the second network element sends third indication information to the first network element, where the third indication information indicates the first network element not to switch the first AI model. In this case, the first network element performs step 806.

806: The first network element skips switching the first AI model based on the third indication information.

In another possible case, if the determining result is that the W AI models include a fifth AI model matching the second AI model, the second network element sends third indication information to the first network element, where the third indication information indicates the first network element to switch the first AI model to the second AI model. In this case, the first network element performs step 807.

807: The first network element switches the first AI model to the second AI model based on the third indication information. In addition, the second network element switches the fourth AI model to the fifth AI model. In other words, the second network element collaborates with the first network element to perform AI model switching.

In the example in step 804, the first network element switches the AI model 1 to the AI model 3, and the second network element switches the AI model a to the AI model c.

When the method 800 is applied to a CSI feedback application scenario, an example in which the first network element is UE and the second network element is an access network device is used. The first AI model is deployed in the UE, the fourth AI model is deployed in the access network device, and the first AI model matches the fourth AI model. The first AI model is used to compress, or compress and quantize CSI measured by the UE, and an output of the first AI model is fed-back CSI. An input of the fourth AI model is the output of the first AI model, and an output of the fourth AI model is restored CSI. A truth label of the fourth AI model is the CSI measured on the UE side. When determining to switch the first AI model, the UE sends a switch request to the access network device. After receiving, from the access network device, information (for example, a possibility of the third indication information) indicating to perform switching, the UE switches the first AI model to the second AI model, and the access network device switches the fourth AI model to the fifth AI model. The second AI model matches the fifth AI model. If the UE receives, from the access network device, information (for example, another possibility of the third indication information) indicating not to perform switching, neither the UE nor the access network device switches the currently used AI model. The UE continues to use the first AI model, and the access network device continues to use the fourth AI model.

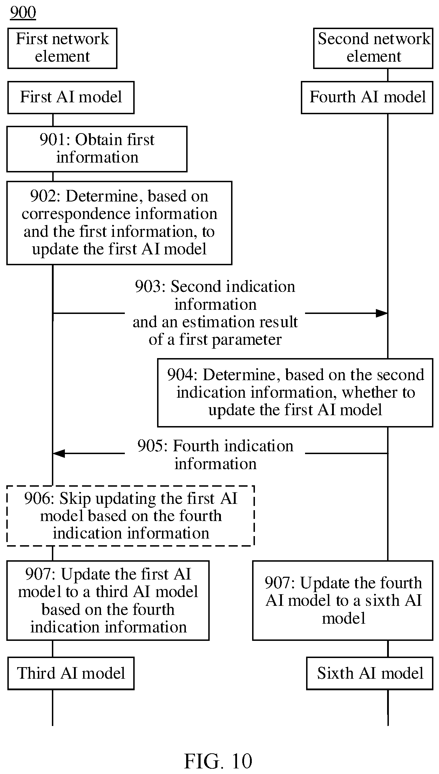

FIG. 10 is a schematic flowchart of an AI model switching or updating method 900 according to this application.

901: A first network element obtains first information.

902: The first network element determines, based on correspondence information and the first information, whether to switch or update a first AI model.

In a possible case, if the first network element determines to update the first AI model, after step 902, steps 903 to 907 are further included.

903: If determining to update the first AI model, the first network element sends second indication information to a second network element, where the second indication information indicates that the first network element requests to update the first AI model.

The second network element receives the second indication information from the first network element.

Optionally, the second network element further sends an estimation result of a first parameter to the first network element.

Optionally, for step 903, refer to another implementation of step 307 in the method 300. Details are not described herein again.

904: The second network element determines, based on the second indication information, whether to update the first AI model.

The second network element learns, based on the second indication information, that the first network element requests to update the first AI model. In an example, training data used to update an AI model is provided by the first network element to the second network element. If determining that the first network element can provide training data that meets a requirement, the second network element determines to update the first AI model. The first network element is UE, and the second network element is a network device. If determining to update the first AI model, the UE further provides the training data to the network device. For example, the training data is the estimation result of the first parameter. Alternatively, the UE may further provide more training data to the network device. Optionally, that the UE provides the training data to the network device may be: The UE sends the training data to the network device after determining to update the AI model. Alternatively, the network device indicates, based on the second indication information, the UE to provide the training data. This is not limited. In this example, the network device determines to update the first AI model. Subsequently, the network device performs AI model training based on the training data provided by the UE, to obtain a new AI model, for example, a third AI model. In another example, training data used to update an AI model is generated on a side of the second network element. In this case, if determining that there is no training data or there is no training data that meets a requirement for training a new AI model, the second network element determines not to update the first AI model. For example, the second network element is UE. If determining that there is no training data or there is no sufficient amount of training data, the UE determines not to train the first AI model.

905: The second network element indicates, based on a determining result, the first network element whether to update the first AI model.

In a possible case, if determining not to update the first AI model, the second network element sends fourth indication information to the first network element, where the fourth indication information indicates the first network element not to update the first AI model. In this case, the first network element performs step 906.

906: The first network element skips updating the first AI model based on the fourth indication information.

In another possible case, if determining to update the first AI model, the second network element sends fourth indication information to the first network element, where the fourth indication information indicates the first network element to update the first AI model. In this case, the first network element performs step 907.

907: The first network element updates the first AI model to a third AI model based on the fourth indication information.

It should be understood that, if determining to update the first AI model, when indicating the first network element to update the first AI model, the second network element also updates a fourth AI model deployed in the second network element, to match an updated AI model of the first network element. Specifically, the second network element updates the fourth AI model to a sixth AI model, where the sixth AI model matches the third AI model.

When the method 900 is applied to a CSI feedback application scenario, an example in which the first network element is UE and the second network element is an access network device is used. The first AI model is deployed in the UE, the fourth AI model is deployed in the access network device, and the first AI model matches the fourth AI model. The first AI model is used to compress, or compress and quantize CSI measured by the UE, and an output of the first AI model is fed-back CSI. An input of the fourth AI model is the output of the first AI model, and an output of the fourth AI model is restored CSI. A truth label of the fourth AI model is the CSI measured on a UE side. When determining to update the first AI model, the UE sends an update request to the access network device. After receiving, from the access network device, information (for example, a possibility of the fourth indication information) indicating to perform updating, the UE updates the first AI model to the third AI model, and the access network device updates the fourth AI model to the sixth AI model. The third AI model matches the sixth AI model. If the UE receives, from the access network device, information (for example, another possibility of the fourth indication information) indicating not to perform updating, neither the UE nor the access network device updates the currently used AI model. The UE continues to use the first AI model, and the access network device continues to use the fourth AI model.

The foregoing embodiments describe in detail the application of the AI model switching or updating method provided in this application to the dual-ended model. It may be understood that, in the foregoing embodiments of the dual-ended model, the UE determines, based on the correspondence information, whether the AI model currently used by the UE needs to be switched or updated, and after determining that the AI model currently used by the UE needs to be switched or updated, the UE sends the switch request or the update request to the access network device. The UE can switch or update the currently used first AI model only based on an acknowledgment fed back by the access network device for the switch request or the update request, for example, the third indication information indicating to switch the first AI model, or the fourth indication information indicating to switch the first AI model.

Optionally, in another implementation of switching or updating the AI model in the dual-ended model, assuming that the first AI model is deployed in the second network element, determining, based on the correspondence information, whether the first AI model needs to be switched or updated may alternatively be performed by the first network element. For example, the second network element is UE, the first AI model is deployed in the UE, and the first network element is an access network device. The access network device determines, based on first information (for example, the estimation result of the first parameter) reported by the UE, whether the first AI model on the UE side needs to be switched or updated. It should be noted that, in the dual-ended model, determining, by the access network device, whether to switch or update the first AI model on the UE side is actually determining whether collaborative switching or collaborative updating can be performed. If collaborative switching or collaborative updating cannot be performed, the access network device indicates the UE not to switch or update the first AI model. If determining that collaborative switching or collaborative updating can be performed, the access network device indicates the UE to switch or update the first AI model.

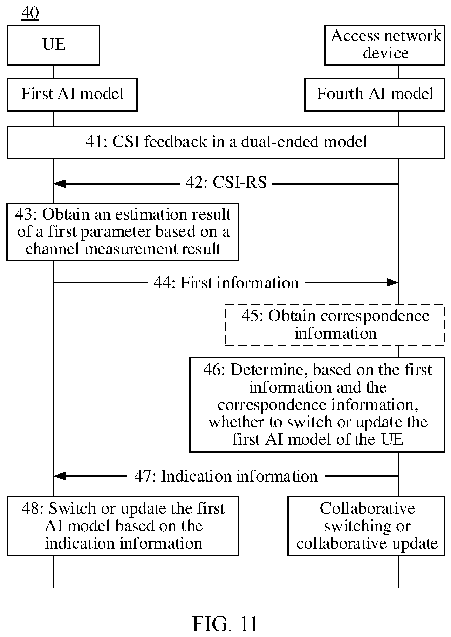

FIG. 11 shows an application example of an AI model switching or updating method in AI-CSI feedback according to this application.

An example in which a first network element is UE and a second network element is an access network device is used for description. The UE is deployed with a first AI model, the access network device is deployed with a fourth AI model, and the first AI model and the fourth AI model are used in a matching manner.

41: The UE and the access network device perform AI-CSI feedback respectively based on the first AI model and the fourth AI model.

42: The UE measures a CSI-RS from the access network device, to obtain a channel measurement result.

43: The UE obtains an estimation result of a first parameter based on the channel measurement result.

44: The UE sends first information to the access network device, where the first information indicates the estimation result of the first parameter.

45: Optionally, the access network device obtains correspondence information.

46: The access network device determines, based on the first information and the correspondence information, whether to switch or update the first AI model of the UE.

47: The access network device sends indication information to the UE based on a determining result, where the indication information indicates the UE to switch or update the first AI model.

In an example, the access network device determines that the estimation result of the first parameter corresponds to a first value in N values, and the first value corresponds to a second AI model in M AI models. The access network device determines whether W stored AI models include an AI model matching the second AI model.

The access network device determines, if a determining result is that the W AI models include a fifth AI model matching the second AI model, to switch the first AI model of the UE. In this case, the access network device sends information A to the UE, where the information A indicates the UE to switch the first AI model to the second AI model. In addition, the access network device switches the fourth AI model to the fifth AI model. The access network device determines, if a determining result is that the W AI models do not include the AI model matching the second AI model, not to switch the first AI model of the UE.

In another example, the access network device determines that the estimation result of the first parameter does not correspond to any one of the N values. The access network device determines, based on the estimation result of the first parameter, whether to update the first AI model of the UE. If a determining result is to update the first AI model of the UE, the access network device sends information B to the UE, where the information B indicates the UE to update the first AI model. In this case, the UE updates the first AI model to a third AI model, and the access network device updates the fourth AI model to a sixth AI model, where the third AI model matches the sixth AI model.

If a determining result is not to update the first AI model of the UE, the access network device may not send any indication to the UE until the access network device determines, based on the first information sent by the UE, to switch or update the AI model on a UE side.

48: The UE switches or updates the first AI model based on indication information from the access network device.

For example, the UE receives the information A from the access network device. If the information A indicates not to switch the first AI model, the UE does not switch the first AI model. If the information A indicates to switch the first AI model, the UE switches the first AI model to the second AI model. In this case, the fourth AI model on the access network device is switched to the fifth AI model, where the fifth AI model matches the second AI model. For another example, the UE receives the information B from the access network device. If the information B indicates not to update the first AI model, the UE does not update the first AI model. For example, if the information B indicates to update the first AI model, the UE updates the first AI model to the third AI model. In this case, the access network device updates the fourth AI model to the sixth AI model.

In the embodiment shown in FIG. 11, because the access network device determines whether to switch or update the AI model on the UE side and indicates the UE, when determining not to switch or update the AI model on the UE side, the access network device does not indicate the UE. The access network device sends, to the UE only when switching or updating needs to be performed, information indicating to perform switching or updating, and the UE switches or updates the AI model on the UE side based on the information indicating to perform switching or updating. When receiving, from the access network device, no information indicating to perform switching or updating, the UE does not switch or update the AI model of the UE.

In the foregoing embodiment, the first network element may determine a change of a use environment of the AI model by monitoring an input of the AI model, to determine in time whether the AI model needs to be switched or updated, to adapt to the change of the use environment.

In this application, considering that an intermediate performance indicator of a dual-ended model may also reflect final performance of a network, for example, network throughput performance, a solution of monitoring the intermediate performance indicator of the dual-ended model is further proposed, to determine, based on a monitoring result of the intermediate performance indicator, whether a network side and the UE side need to collaboratively switch or update the AI model. In this embodiment, network performance is the final performance, and performance of the AI model is intermediate performance relative to the network performance. Therefore, the intermediate performance indicator may be applied to a unilateral AI model, for example, the foregoing application scenario such as the CSI prediction or the beam management, or may be applied to a bilateral model, for example, the CSI feedback. When the intermediate performance indicator is applied to the unilateral AI model, an input indicator of the AI model is monitored to obtain a monitoring result. The input indicator of the AI model is, for example, the first parameter, and the monitoring result is, for example, the estimation result of the first parameter. The estimation result of the first parameter is compared with a label of the AI model to obtain a GCS. Whether to switch or update the AI model is determined based on the GCS and a specified threshold T. The following uses the bilateral model as an example to describe a process of switching or updating the AI model by monitoring the intermediate performance indicator.

Optionally, the intermediate performance indicator includes but is not limited to one or more of the following: a generalized cosine similarity (generalized cosine similarity, GCS), a squared generalized cosine similarity (squared generalized cosine similarity, SGCS), a cell throughput indicator, an average/edge user perceived rate indicator, and the like.

Generally, higher complexity of an AI model indicates better robustness of adaptation of the AI model to a more complex environment. In this embodiment, a correspondence is established between complexity of the AI model and the AI model, so that performance of a network in which the AI model is deployed does not decrease or deteriorate with the change of the use environment of the AI model. If it is found, by monitoring the intermediate performance indicator, that the use environment of the AI model changes, an AI model of corresponding complexity may be selected based on the correspondence, to ensure that an AI model that can meet a precision requirement is always used, and further ensure stable network performance.

In this embodiment, the correspondence information indicates a correspondence between the AI model and complexity information of the AI model. For example, the complexity information may be a complexity level. Different complexity levels correspond to different precision or precision ranges of the AI model.

An example in which the intermediate performance indicator is the SGCS is used. Correspondence information on the UE side is shown in Table 10, and correspondence information on an access network device side is shown in Table 11. Table 10 and Table 11 are examples in which the correspondence information indicates the correspondence between the AI model and the complexity of the AI model. Table 10 is used as an example. An AI model 1 corresponds to a complexity level 1. An AI model 2 corresponds to a complexity level 2. If the complexity level 2 is higher than the complexity level 1, it indicates that the AI model 2 is more adaptable to the use environment. For example, in Table 10, the complexity levels 1 to 3 gradually increase, and in Table 11, complexity levels 1 to 4 gradually increase.

**Table 10**

| AI model | AI model complexity level |
|---|---|
| AI model 1 | 1 |
| AI model 2 | 2 |
| AI model 3 | 3 |

**Table 11**

| AI model | AI model complexity level |
|---|---|
| AI model a | 1 |
| AI model b | 2 |
| AI model c | 3 |
| AI model d | 4 |

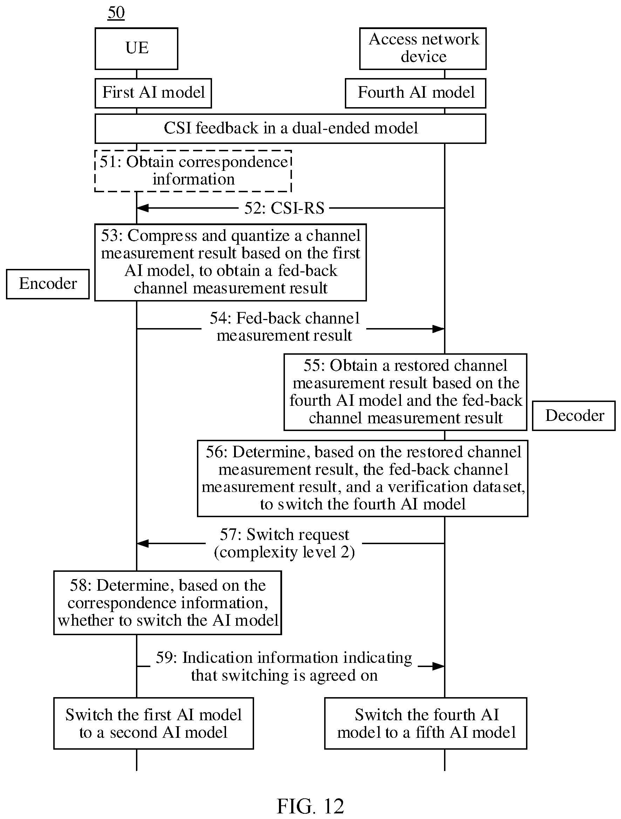

FIG. 12 shows an example of an AI model switching method in a dual-ended model.

For example, it is assumed that an AI model currently used by UE is a first AI model, for example, the AI model 1 in Table 10, and an AI model currently used on a network side is a fourth AI model, for example, the AI model a in Table 11. Both the AI model 1 and the AI model a correspond to a complexity level 1, in other words, the first AI model matches the fourth AI model.

On this basis, a process of switching or updating the AI model is described with reference to FIG. 12.

51: Optionally, the UE obtains correspondence information, where the correspondence information indicates a correspondence between the AI model on a UE side and complexity information of the AI model. Table 10 is used as an example. The correspondence information indicates three complexity levels and AI models corresponding to the three complexity levels, which are specifically the AI model 1 to an AI model 3.

52: The UE measures a reference signal from an access network device, to obtain a channel measurement result.

53: The UE compresses the channel measurement result based on the first AI model, or compresses and quantizes the channel measurement result based on the first AI model, to obtain a fed-back channel measurement result.

54: The UE sends the fed-back channel measurement result to the access network device.

The access network device receives the fed-back channel measurement result from the UE.

55: The access network device processes the fed-back channel measurement result based on the fourth AI model, to obtain a restored channel measurement result.

56: The access network device determines, based on the restored channel measurement result and a verification dataset, whether to switch or update the fourth AI model.

The access network device restores the fed-back channel measurement result based on the fourth AI model, to obtain the restored channel measurement result. The verification dataset includes a label of the fourth AI model, which is specifically the channel measurement result obtained through measurement. A degree of a difference between the restored channel measurement result and a truth value may be determined by comparing the restored channel measurement result and the truth value. The degree of the difference may be indicated by an SGCS or a GCS. Optionally, the degree of the difference may be indicated by another error indicator. The GCS is used as an example. A larger GCS indicates that the restored channel measurement result is closer to the truth value, and performance of the fourth AI model is better. On the contrary, a smaller GCS indicates that the difference between the restored channel measurement result and the truth value is larger, and the performance of the fourth AI model is poorer. In this way, whether to switch or update the fourth AI model may be determined.

For example, in an embodiment of monitoring an intermediate performance indicator, a switching condition may be: A monitoring result of the intermediate performance indicator is less than a specified threshold T, and a model library of AI models on an access network device side includes an AI model whose complexity is higher than complexity of the currently used AI model.

An update condition may be: A monitoring result of the intermediate performance indicator is less than a specified threshold T, and a model library of AI models on an access network device side does not include an AI model whose complexity is higher than complexity of the currently used AI model.

It should be understood that, in the foregoing switching condition or update condition, the monitoring result of the intermediate performance indicator being less than the specified threshold T is merely used as an example, and a specific setting of the switching condition or the update condition may depend on the intermediate performance indicator. For example, the switching condition or the update condition may alternatively be the monitoring result of the intermediate performance indicator being greater than or equal to the threshold T, or the monitoring result of the intermediate performance indicator and the specified threshold T meeting another specified relationship. This is not limited in this application.

In this embodiment, an example in which the intermediate performance indicator is an SGCS or a GCS is used. If a value of the SGCS or the GCS is greater than the specified threshold T, it indicates that a precision error of the currently used AI model is within an acceptable range, and switching or updating may not be performed. If a value of the SGCS or the GCS is less than or equal to the specified threshold T, it indicates that a precision error of the currently used AI model exceeds the acceptable range. In this case, the AI model needs to be switched or updated. Specific AI model switching or updating depends on whether there is an AI model for switching. If the model library on the access network device side includes the AI model for switching, it is determined that the AI model is to be switched. If the model library on the access network device side does not include the AI model for switching, it is determined that the AI model is to be updated. For example, the intermediate performance indicator is the SGCS, and the set threshold T is 0.95. If the monitoring result of the intermediate performance indicator is less than the threshold T, it is determined that the switching condition/update condition is met. It is assumed that a value of the SGCS of the verification dataset calculated by the access network device is 0.96, which is greater than the threshold 0.95. In this case, the access network device determines not to switch or update the fourth AI model. If a value of the SGCS calculated by the access network device is 0.91, which is less than the threshold T, the access network device determines, depending on whether the model library on the access network device side includes the AI model for switching, to switch or update the fourth AI model.

In FIG. 12, an example in which the access network device determines to perform switching is used. As described above, the AI model currently used by the access network device is the AI model a, and the AI model a corresponds to the complexity level 1. If determining that the value of the SGCS is less than the threshold T, the access network device determines, based on correspondence information 1, that the model library on the access network device side includes an AI model whose complexity is higher than complexity of the AI model a, and the access network device determines to switch the AI model a.

57: The access network device sends a switch request to the UE.

The switch request indicates that the access network device requests to switch the AI model.

58: The UE determines, based on the switch request and the correspondence information, whether to switch the AI model.

Optionally, the correspondence information is predefined in a protocol. For example, both the correspondence information 1 and correspondence information 2 are predefined in the protocol. In this case, the switch request sent by the access network device may carry an identifier of an AI model to which the access network device requests to switch. For example, the switch request carries an identifier of an AI model b or an identifier of an AI model 2. The UE side may learn, based on the switch request and the identifier of the AI model b or the identifier of the AI model 2, that the access network device side requests to switch the currently used AI model.

Optionally, the correspondence information 2 is stored on the access network device side, and the correspondence information 1 is stored on the UE side. Complexity levels and quantities of AI models used on the access network device side and the UE side are predefined or negotiated. In this case, the switch request sent by the access network device may carry complexity information of the AI model to which the access network device request to switch, for example, information indicating a complexity level 2. The UE side may learn, based on the switch request and the complexity information of the AI model, that the access network device requests to switch the current AI model, and may determine a corresponding AI model used for switching on the UE side, for example, the AI model 2 corresponding to the complexity level 2.

Optionally, the correspondence information 2 is stored on the access network device side, and the correspondence information 1 is stored on the UE side. Complexity levels and quantities of AI models used on the access network device side and the UE side are predefined or negotiated. For example, a switching rule of an AI model in an application scenario (for example, CSI feedback) on the UE side and the access network device side is default or negotiated. Herein, the switching rule is: When the AI model is switched, the complexity level of the AI model is switched gradually, and switching is not performed across complexity levels. For example, if the currently used AI model a does not meet a precision requirement, and the AI model b corresponds to the complexity level 2, the AI model a is switched to the AI model b corresponding to the complexity level 2 by default, and the AI model a is not switched to an AI model with a higher complexity level across the complexity level 2. In this implementation, the access network device may send only the switch request to the UE. The UE may learn, based on the switch request, that the precision of the currently used first AI model does not meet the precision requirement, and switch the AI model 1 to the AI model 2 by default.

Certainly, the AI model may alternatively be switched across complexity levels. For example, when a difference between the monitoring result of the intermediate performance indicator and the precision requirement is excessively large, reference is made to the foregoing example in which the access network device side indicates the complexity information of the AI model to the UE or the foregoing example in which the access network device side indicates the identifier of the AI model to the UE. Details are not described again.

The foregoing uses switching as an example, and a process of updating the AI model is similar. When determining that none of AI models in the AI model library on the access network side can meet the current precision requirement, the access network device may send an update request to the UE. For example, if determining that an AI model with a highest complexity level in the model library on the access network side does not meet the current precision requirement, the access network device determines to update the AI model.

In addition, switching is from low complexity to high complexity is used as an example in the foregoing examples. When the AI model is switched from a scenario in a complex environment to a scenario in a simple environment, the complexity of the AI model may also be considered. When the precision requirement can be ensured, a high-complexity AI model is switched to a low-complexity AI model. This is not limited.

In step 58, if determining not to switch the first AI model, the UE sends, to the access network device, indication information indicating not to perform switching. In this case, neither the UE nor the access network device performs AI model switching. FIG. 12 does not show a case in which the switching is not performed, and only shows a case in which the switching is needed, as shown in step 59.

59: The UE sends, to the access network device, information indicating to perform switching.

The access network device switches the fourth AI model to a fifth AI model based on the information indicating to perform switching from the UE. In addition, the UE switches the first AI model to a second AI model, to complete collaborative switching of the AI model.

In the example in FIG. 12, timely switching or update of the AI model may also be implemented by monitoring the intermediate performance indicator of the dual-ended model, to adapt to a change of a use environment of the AI model. This helps reduce or avoid impact on performance of a network in which the AI model is deployed.

In the embodiment of FIG. 12, the switching of the AI model is mainly used as an example for description. A person skilled in the art may learn of, based on the foregoing example in which the AI model is updated by monitoring the input of the AI model, an implementation of updating the AI model by monitoring the intermediate performance indicator. Details are not described herein again.

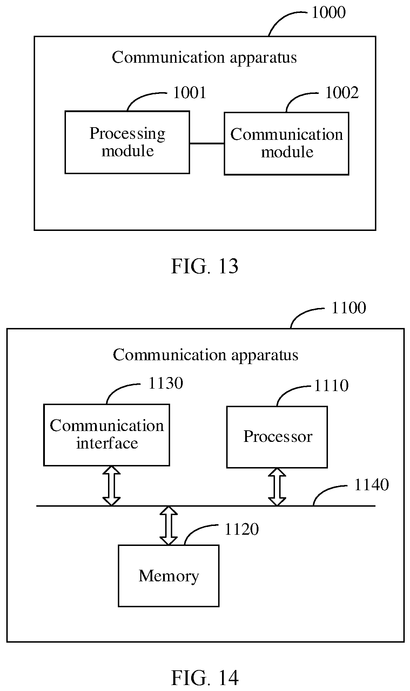

The foregoing describes in detail the AI model switching or updating method provided in this application. The following describes a corresponding communication apparatus. Refer to FIG. 13. This application provides a communication apparatus 1000.

As shown in FIG. 13, the communication apparatus 1000 includes a processing module 1001 and a communication module 1002. The communication apparatus 1000 may be a terminal device, or may be a communication apparatus, for example, a chip, a chip system, or a circuit, that is used in the terminal device or that is used with the terminal device in a matching manner and that can implement a method performed on a terminal device side. Alternatively, the communication apparatus 1000 may be a network device, or may be a communication apparatus, for example, a chip, a chip system, or a circuit, that is used in the network device or that is used with the network device in a matching manner and that can implement a method performed on a network device side. For example, the network device may be the access network device in the method embodiments of this application.

The communication module may also be referred to as a transceiver module, a transceiver, a transceiver device, a transceiver apparatus, or the like. The processing module may also be referred to as a processor, a processing board, a processing unit, a processing apparatus, or the like. Optionally, the communication module is configured to perform a sending operation and a receiving operation on the terminal device side or the network device side in the foregoing methods. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 1000 is used in the terminal device, the processing module 1001 may be configured to implement a processing function of the terminal device in the embodiments in FIG. 3 to FIG. 12, and the communication module 1002 may be configured to implement receiving and sending functions of the terminal device in the embodiments in FIG. 3 to FIG. 12.

When the communication apparatus 1000 is used in the network device, the processing module 1001 may be configured to implement a processing function of the network device (for example, the access network device) in the embodiments in FIG. 3 to FIG. 12, and the communication module 1002 may be configured to implement receiving and sending functions of the network device in the embodiments in FIG. 3 to FIG. 12.

It should be noted that, the first network element or the second network element shown in FIG. 3, FIG. 4, FIG. 9, and FIG. 10 may be specifically a terminal device or a network device (for example, an access network device), which is described in detail in the foregoing method embodiments. Reference may be made to specific embodiments to understand that the first network element or the second network element is a terminal device or a network device. Details are not described herein again.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using an entity apparatus. For example, if the apparatus is implemented by using a chip/chip circuit, the communication module may be an input/output circuit and/or a communication interface, and performs an input operation (corresponding to the foregoing receiving operation) and an output operation (corresponding to the foregoing sending operation). The processing module is an integrated processor, a microprocessor, or an integrated circuit.

Division into the modules in this application is an example, is merely division into logical functions, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

Based on a same technical concept, refer to FIG. 14. This application further provides a communication apparatus 1100. Optionally, the communication apparatus 1100 may be a chip or a chip system. Optionally, in this application, the chip system may include a chip, or may include a chip and another discrete component.

The communication apparatus 1100 may be configured to implement a function of any network element in the communication system described in the foregoing examples. The communication apparatus 1100 may include at least one processor 1110. Optionally, the processor 1110 is coupled to a memory. The memory may be located in the apparatus. Alternatively, the memory may be integrated with the processor. Alternatively, the memory may be located outside the apparatus. For example, the communication apparatus 1100 may further include at least one memory 1120. The memory 1120 stores a computer program, a computer program or instructions, and/or data necessary for implementing any one of the foregoing examples. The processor 1110 may execute the computer program stored in the memory 1120, to complete the method in any one of the foregoing examples.

The communication apparatus 1100 may further include a communication interface 1130, and the communication apparatus 1100 may exchange information with another device through the communication interface 1130. For example, the communication interface 1130 may be a transceiver, a circuit, a bus, a module, a pin, or a communication interface of another type. When the communication apparatus 1100 is a chip-type apparatus or circuit, the communication interface 1130 in the apparatus 1100 may alternatively be an input/output circuit, and may input information (or referred to as receiving information) and output information (or referred to as sending information). The processor is an integrated processor, a microprocessor, an integrated circuit, or a logic circuit. The processor may determine output information based on input information.

The coupling in this application may be an indirect coupling or a communication connection between apparatuses, units, or modules in an electrical form, a mechanical form, or another form, and is used for information exchange between the apparatuses, the units, or the modules. The processor 1110 may operate cooperatively with the memory 1120 and the communication interface 1130. A specific connection medium between the processor 1110, the memory 1120, and the communication interface 1130 is not limited in this application.

Optionally, as shown in FIG. 14, the processor 1110, the memory 1120, and the communication interface 1130 are connected to each other through a bus 1140. The bus 1140 may be a peripheral component interconnect (peripheral component interconnect, PCI) bus, an extended industry standard architecture (extended industry standard architecture, EISA) bus, or the like. The bus can be divided into an address bus, a data bus, a control bus, and the like. For ease of representation, only one bold line is used to represent the bus in FIG. 14, but this does not mean that there is only one bus or only one type of bus.

In this application, the processor may be a general-purpose processor, a digital signal processor, an application-specific integrated circuit, a field programmable gate array or another programmable logic device, a discrete gate or transistor logic device, or a discrete hardware component, and may implement or perform the method, steps, and logical block diagram disclosed in this application. The general-purpose processor may be a microprocessor, any conventional processor, or the like. The steps of the methods disclosed with reference to this application may be directly implemented by a hardware processor, or may be implemented by a combination of hardware and a software module in a processor.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be used to carry or store expected program code in a form of an instruction or a data structure and that can be accessed by a computer, but is not limited thereto. The memory in this application may alternatively be a circuit or any other apparatus that can implement a storage function, and is configured to store program instructions and/or data.

In a possible implementation, the communication apparatus 1100 may be used in a network device side, for example, the access network device in embodiments of this application, a core network device, or a host or a cloud device in an OTT system. Specifically, the communication apparatus 1100 may be a network device, or may be an apparatus that can support the network device in implementing a corresponding function on a network device side in any one of the foregoing examples. The memory 1120 stores a computer program (or instructions) and/or data for implementing the functions of the network device side in any one of the foregoing examples. The processor 1110 may execute the computer program stored in the memory 1120, to complete the method performed by the network device side in any one of the foregoing examples. The communication interface in the communication apparatus 1100 may be configured to interact with the terminal device, to send information to the terminal device or receive information from the terminal device. In addition, optionally, the communication interface in the communication apparatus 1000 may be further configured to interact with another network element (for example, a third network element), for example, obtain correspondence information from the third network element, or obtain an AI model from the third network element.

In another possible implementation, the communication apparatus 1100 may be used in a terminal device. Specifically, the communication apparatus 1100 may be a terminal device, or may be an apparatus that can support the terminal device in implementing a function of the terminal device in any one of the foregoing examples. The memory 1120 stores a computer program (or instructions) and/or data for implementing the functions of the terminal device in any one of the foregoing examples. The processor 1110 may execute the computer program stored in the memory 1120, to complete the method performed by the terminal device in any one of the foregoing examples. The communication interface in the communication apparatus 1100 may be configured to interact with the network device side (for example, the access network device), and send information to the network device side or receive information from the access network device.

The communication apparatus 1100 provided in this example may be used on the network device side (for example, the access network device) to complete the method performed by the network device side, or may be used in the terminal device to complete the method performed by the terminal device. Therefore, for technical effects that can be achieved by this embodiment, refer to the foregoing method embodiments. Details are not described herein again.

Based on the foregoing example, this application provides a communication system. In an example, the communication system includes a first network element and a second network element. In another example, the communication system includes a first network element, a second network element, and a third network element. The communication system may implement the AI model switching or updating method provided in the embodiments shown in FIG. 3 to FIG. 12.

All or a part of the technical solutions provided in this application may be implemented by using software, hardware, firmware, or any combination thereof. When the software is used to implement the technical solutions, all or a part of the technical solutions may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, a terminal device, an access network device, or another programmable apparatus. The computer instructions may be stored in a computer-readable storage medium or transmission of the computer instructions may be performed from a computer-readable storage medium to another computer-readable storage medium. For example, the transmission of the computer instructions may be performed from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit.

When the function is implemented in a form of a software function unit and sold or used as an independent product, the function may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

A person skilled in the art can make various modifications and variations to this application without departing from the scope of this application. This application is intended to cover these modifications and variations of this application provided that they fall within the scope of protection defined by the claims of this application and their equivalent technologies.

## Claims

1. An artificial intelligence AI model switching or updating method, wherein the method is performed by a first network element or a chip of the first network element, and the method comprises:
obtaining first information, wherein the first information indicates an estimation result of a first parameter, the estimation result of the first parameter is based on a channel measurement result, and the channel measurement result is an input of an AI model; and
determining, based on correspondence information and the first information, whether to switch or update a first AI model, wherein the first AI model is deployed in the first network element or a second network element, the correspondence information indicates a correspondence between M AI models and N values of the first parameter, M is an integer greater than or equal to 1, and N is an integer greater than or equal to 1.

2. The method according to claim 1, wherein the determining, based on correspondence information and the first information, whether to switch or update a first AI model comprises:
determining that the estimation result of the first parameter corresponds to a first value in the N values, wherein the first value corresponds to a second AI model in the M AI models; and
determining to switch the first AI model to the second AI model.

3. The method according to claim 1, wherein the determining, based on correspondence information and the first information, whether to switch or update a first AI model comprises:
determining that the estimation result of the first parameter does not correspond to any one of the N values; and
determining to update the first AI model.

4. The method according to any one of claims 1 to 3, wherein the first AI model is deployed in the first network element, and the first network element is a terminal device.

5. The method according to claim 4, wherein after the determining, based on correspondence information and the first information, to switch the first AI model to the second AI model, the method further comprises:
sending first indication information to the second network element, wherein the first indication information indicates that the first network element requests to switch the first AI model to the second AI model.

6. The method according to claim 5, wherein the method further comprises:
receiving the second AI model from the second network element; and
switching the first AI model to the second AI model.

7. The method according to claim 4, wherein after the determining, based on correspondence information and the first information, to update the first AI model, the method further comprises:
sending second indication information to the second network element, wherein the second indication information is used to request to update the first AI model.

8. The method according to any one of claims 4 to 7, wherein the obtaining first information comprises:
measuring a reference signal to obtain the channel measurement result; and
obtaining the estimation result of the first parameter based on the channel measurement result, wherein the first information comprises the estimation result of the first parameter.

9. The method according to claim 8, wherein before the determining, based on correspondence information and the first information, to switch or update the first AI model, the method further comprises:
obtaining a part or all of the correspondence information from the second network element or a third network element.

10. The method according to any one of claims 1 to 3, wherein the first network element is a network device, the first AI model is deployed in the second network element, and the second network element is a terminal device.

11. The method according to claim 10, wherein the obtaining first information comprises:
receiving the first information from the second network element, wherein the first information comprises the estimation result of the first parameter, or the first information comprises information used to determine the estimation result of the first parameter, and the estimation result of the first parameter is based on the channel measurement result obtained on a side of the second network element by measuring a reference signal.

12. The method according to claim 10 or 11, wherein if the determining, based on correspondence information and the first information, to switch the first AI model to the second AI model, the method further comprises:
sending the second AI model to the second network element.

13. The method according to claim 11 or 12, wherein if the determining, based on correspondence information and the first information, to update the first AI model, the method further comprises:
obtaining training data;
performing AI model training based on the training data, to obtain a third AI model; and
sending the third AI model to the second network element.

14. The method according to claim 4, wherein after the determining, based on correspondence information and the first information, to switch the first AI model, the method further comprises:
sending first indication information to the second network element, wherein the first indication information indicates that the first network element requests to switch the first AI model;
receiving third indication information from the second network element, wherein the third indication information indicates the first network element to switch the first AI model, or the third indication information indicates the first network element not to switch the first AI model; and
switching the first AI model to the second AI model based on the third indication information, or skipping switching the first AI model based on the third indication information.

15. The method according to claim 4, wherein after the determining, based on correspondence information and the first information, to update the first AI model, the method further comprises:
sending second indication information to the second network element, wherein the second indication information indicates that the first network element requests to update the first AI model;
receiving fourth indication information from the second network element, wherein the fourth indication information indicates the first network element to update the first AI model, or the fourth indication information indicates the first network element not to update the first AI model; and
updating the first AI model to a third AI model based on the fourth indication information, or skipping updating the first AI model based on the fourth indication information.

16. The method according to any one of claims 1 to 13, wherein the AI model is applied to CSI prediction or beam management.

17. The method according to claim 14 or 15, wherein the AI model is applied to CSI feedback.

18. The method according to any one of claims 4 to 17, wherein the first parameter comprises one or more of the following:
a moving speed of the terminal device;
a channel signal to interference plus noise ratio SINR; or
a parameter reflecting a channel non-line-of- sight NLOS degree.

19. The method according to claim 8 or 11, wherein the reference signal is a channel state information-reference signal CSI-RS.

20. The method according to claim 11, wherein a fourth AI model is deployed in the first network element, and the fourth AI model and the first AI model are used in a matching manner; and
the determining, based on correspondence information and the first information, whether to switch the first AI model comprises:
determining that the estimation result of the first parameter corresponds to the first value in the N values, wherein the first value corresponds to the second AI model in the M AI models;
determining whether W stored AI models deployed in the first network element comprise an AI model matching the second AI model; and
determining, based on a determining result, whether to switch the first AI model.

21. An AI model switching or updating method, wherein the method is performed by a second network element or a chip of the second network element, and the method comprises:
obtaining a channel measurement result fed back by a first network element;
restoring, based on a fourth AI model, the fed-back channel measurement result, to obtain a restored channel measurement result; and
determining, based on the fed-back channel measurement result and the restored channel measurement result, whether to switch or update the fourth AI model.

22. The method according to claim 21, wherein the fed-back channel measurement result is obtained by the first network element by processing, based on a first AI model, a channel measurement result obtained through measurement.

23. The method according to claim 21 or 22, wherein the determining, based on the fed-back channel measurement result and the restored channel measurement result, whether to switch or update the fourth AI model comprises:
determining a value of an error indicator of a verification dataset based on the fed-back channel measurement result, the restored channel measurement result, and the verification dataset; and
determining, if the value of the error indicator meets a specified condition, to switch or update the fourth AI model.

24. The method according to claim 23, wherein the specified condition comprises: the value of the error indicator is greater than or equal to a specified threshold T.

25. The method according to claim 23 or 24, wherein the determining, if the value of the error indicator meets a specified condition, to switch or update the fourth AI model comprises:
if the value of the error indicator meets the specified condition, Q AI models stored in the second network element comprise a fifth AI model, and complexity of the fifth AI model is higher than complexity of the currently used fourth AI model, determining to switch the fourth AI model;
or
if the value of the error indicator meets the specified condition, and Q AI models stored in the second network element do not comprise an AI model whose complexity is higher than complexity of the currently used fourth AI model, determining to update the fourth AI model.

26. The method according to any one of claims 21 to 25, wherein if the determining to switch or update the fourth AI model, the method further comprises:
sending a switch request to the first network element, wherein the switch request indicates to request to switch the fourth AI model;
receiving, from the first network element, information indicating to perform switching; and
switching the fourth AI model to the fifth AI model based on the information indicating to perform switching.

27. The method according to any one of claims 21 to 25, wherein if the determining to update the fourth AI model, the method further comprises:
sending an update request to the first network element, wherein the update request is used to request to update the fourth AI model;
receiving, from the first network element, information indicating to perform updating; and
updating the fourth AI model to a sixth AI model based on the information indicating to perform updating.

28. An AI model switching or updating method, wherein the method is performed by a first network element or a chip of the first network element, and the method comprises:
receiving a switch request from a second network element, wherein the switch request indicates that the second network element requests to switch an AI model; and
determining, based on the switch request and correspondence information, whether to switch a currently used first AI model, wherein the correspondence information indicates a correspondence between Q AI models and Q pieces of complexity information of the AI models, complexity information corresponding to the first AI model indicates a first complexity level, and Q is an integer greater than or equal to 1.

29. The method according to claim 28, wherein the determining, based on the switch request and correspondence information, whether to switch a currently used first AI model comprises:
determining, based on the switch request, whether the Q AI models comprise an AI model corresponding to a second complexity level, wherein the second complexity level is higher than the first complexity level; and
if the Q AI models comprise a second AI model corresponding to the second complexity level, determining to switch the first AI model to the second AI model; and
the method further comprises:
sending, to the second network element, information indicating to perform switching; and
switching the first AI model to the second AI model.

30. The method according to claim 28, wherein the determining, based on the switch request and correspondence information, whether to switch a currently used first AI model comprises:
determining, based on the switch request, whether the Q AI models comprise an AI model corresponding to a second complexity level, wherein the second complexity level is higher than the first complexity level; and
if the Q AI models do not comprise an AI model corresponding to the second complexity level, determining not to switch the first AI model; and
the method further comprises:
sending, to the first network element, indication information indicating not to perform switching.

31. An AI model switching or updating method, wherein the method is performed by a second network element or a chip of the second network element, and the method comprises:
sending correspondence information to a first network element, wherein
the correspondence information indicates a correspondence between M AI models and N values of a first parameter, M is an integer greater than or equal to 1, and N is an integer greater than or equal to 1;
or
the correspondence information indicates a correspondence between Q AI models and R pieces of complexity information of the AI models, the R pieces of complexity information indicate different complexity levels, and Q and R both are integers greater than or equal to 1.

32. The method according to claim 31, wherein the method further comprises:
sending second information to the first network element, wherein the second information indicates the first parameter.

33. A communication apparatus, configured to implement the method according to any one of claims 1 to 32.

34. A communication apparatus, comprising:
a processor, wherein the processor is coupled to a memory, and the processor is configured to invoke computer program instructions stored in the memory, to perform the method according to any one of claims 1 to 32.

35. A communication apparatus, comprising a processor and a communication interface, wherein the communication interface is configured to receive data and/or information, and transmit the received data and/or information to the processor; the processor processes the data and/or the information; and the communication interface is further configured to output data and/or information processed by the processor, to enable the communication apparatus to perform the method according to any one of claims 1 to 32.

36. A computer-readable storage medium, wherein the computer-readable storage medium stores instructions, and when the instructions are run on a computer, the computer is enabled to perform the method according to any one of claims 1 to 32.

37. A computer program product, wherein the computer-readable storage medium stores instructions, and when the instructions are run on a computer, the computer is enabled to perform the method according to any one of claims 1 to 32.

38. A communication system, comprising the communication apparatus according to any one of claims 33 to 35.
